(19)

**Europäisches Patentamt**
**European Patent Office**
**Office européen des brevets**

(11) **EP 4 372 764 A1**

(12) **EUROPEAN PATENT APPLICATION**
published in accordance with Art. 153(4) EPC

(43) Date of publication:
**22.05.2024 Bulletin 2024/21**

(21) Application number: **22842184.8**

(22) Date of filing: **14.07.2022**

(51) International Patent Classification (IPC):
*H01B 1/06* (2006.01)    *H01B 1/10* (2006.01)
*H01B 13/00* (2006.01)    *H01M 10/052* (2010.01)
*H01M 10/0562* (2010.01)

(52) Cooperative Patent Classification (CPC):
**H01B 1/06; H01B 1/10; H01B 13/00; H01M 10/052;**
**H01M 10/0562;** Y02E 60/10

(86) International application number:
**PCT/JP2022/027739**

(87) International publication number:
**WO 2023/286842 (19.01.2023 Gazette 2023/03)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **16.07.2021  JP 2021118240**

(71) Applicants:
 • **Idemitsu Kosan Co.,Ltd.**
   **Tokyo 100-8321 (JP)**
 • **National University Corporation**
   **Hokkaido University**
   **Sapporo-shi, Hokkaido 060-0808 (JP)**

(72) Inventors:
 • **TERAI, Kota**
   **Tokyo 100-8321 (JP)**
 • **UTSUNO, Futoshi**
   **Tokyo 100-8321 (JP)**
 • **HIGUCHI, Hiroyuki**
   **Tokyo 100-8321 (JP)**
 • **TADANAGA, Kiyoharu**
   **Sapporo-shi, Hokkaido 060-0808 (JP)**
 • **MIURA, Akira**
   **Sapporo-shi, Hokkaido 060-0808 (JP)**
 • **ROSERO NAVARRO, Nataly Carolina**
   **Sapporo-shi, Hokkaido 060-0808 (JP)**

(74) Representative: **Vossius & Partner**
**Patentanwälte Rechtsanwälte mbB**
**Siebertstrasse 3**
**81675 München (DE)**

(54) **SULFIDE SOLID ELECTROLYTE**

(57) Provided is a sulfide solid electrolyte that has a novel crystal structure and exhibits an ionic conductivity, the sulfide solid electrolyte containing a lithium atom, a phosphorus atom, a sulfur atom, and at least one kind of halogen atom selected from a chlorine atom and a bromine atom, and having a specific diffraction peak in powdery X-ray diffractometry using CuKα line, and a method for producing a sulfide solid electrolyte, the method including mixing a solvent 1 having a heteroatom and a raw material 1 containing specific atoms to prepare a mixture, preparing a solution that contains a raw material 2 containing a halogen atom and a solvent 2 having a heteroatom, mixing the mixture and the solution to prepare a fluid, and heating the fluid.

[Fig. 2]

**EP 4 372 764 A1**

**Description**

Technical Field

The present invention relates to a sulfide solid electrolyte.

Background Art

With rapid spread of information-related devices, communication devices, and so on, such as personal computers, video cameras, and mobile phones, in recent years, development of batteries that are utilized as a power source therefor is considered to be important. Above all, from the viewpoint of high energy density, lithium ion batteries attract attention.

Heretofore, in batteries to be used for such an application, an electrolytic solution containing a flammable organic solvent has been used. A battery using an organic solventcontaining electrolyte as an electrolytic solution exhibits a high ionic conductivity and is excellent in the performance as a battery, but since the electrolytic solution is liquid and flammable, its safety relating to leakage and ignition is a concern when used in a battery. Especially in vehicle-mounted applications, high capacity and high output power are required, and a concern on safety of a battery using a conventional electrolytic solution increases more than ever. Here, development of a battery having a solid electrolyte layer in place of an electrolytic solution is being made in view of the fact that by making the battery fully solid, simplification of a safety unit can be achieved without using a flammable organic solvent within the battery and the battery is excellent in manufacturing costs and productivity.

As a solid electrolyte used in a sulfide electrolyte layer, a sulfide solid electrolyte has heretofore been known, and such a sulfide solid electrolyte is firstly desired to be increased in the ionic conductivity. As such a sulfide solid electrolyte, for example, PTL 1 discloses an $Li_2S$-$P_2S_5$-based solid electrolyte. As a solid electrolyte having a halogen atom, PTL 2 discloses an $Li_2S$-$P_2S_5$-LiI-based sulfide solid electrolyte, and PTLs 3 and 4 disclose a $Li_2S$-$P_2S_5$-LiI-LiBr-based sulfide solid electrolyte and the like.

In addition, as a sulfide solid electrolyte, PTL 5 discloses a solid electrolyte represented by $Li_{1-a-b-c-d}P_aT_bA_cX_d$ (T: one element selected from P, As, Si, Ge, Al, and B, A: one or more elements of S and Se, X: one or more elements of a halogen element and N, $0{\leq}a{\leq}0.129$, $0{\leq}b{\leq}0.096$, $0.316{\leq}c{\leq}0.484$, $0.012{\leq}d{\leq}0.125$), PTL 6 discloses a solid electrolyte having an argyrodite-type crystal structure, and NPL 1 discloses a lithium chlorothiophosphate solid electrolyte represented by $Li_{15}P_4Si_6Cl_3$.

Citation List

Patent Literature

PTL 1: JP 2005-228570 A

PTL 2: JP 2013-201110 A

PTL 3: WO 2014/208180

PTL 4: WO 2014/208239

PTL 5: WO2018/183365

PTL 6: WO2018/047566

Nonpatent Literature

NPL 1: Inorg. Chem. 2020, 59, 1, 226-234

Summary of Invention

Technical Problem

The present invention has been made in view of such circumstances, and has an object to provide a sulfide solid electrolyte that has a novel crystal structure and exhibits an ionic conductivity, and a method for producing the same.

Solution to Problem

A modified sulfide solid electrolyte according to the present invention is

a sulfide solid electrolyte containing a lithium atom, a phosphorus atom, a sulfur atom, and at least one kind of halogen atom selected from a chlorine atom and a bromine atom,
the sulfide solid electrolyte having a diffraction peak at $2\theta = 20.8 \pm 0.5°$ and $22.7 \pm 0.3°$ in powdery X-ray diffractometry using $CuK\alpha$ line.

The method for producing a modified sulfide solid electrolyte according to the present invention is a method for producing a sulfide solid electrolyte, including

mixing a solvent 1 having a heteroatom and a raw material 1 containing any atom of a lithium atom, a phosphorus atom, and a sulfur atom to prepare a mixture,
preparing a solution that contains a raw material 2 containing at least one kind of halogen atom selected from a chlorine atom and a bromine atom and a solvent 2 having a heteroatom, and
mixing the mixture and the solution.

Advantageous Effects of Invention

According to the present invention, it is possible to provide a sulfide solid electrolyte that has a novel crystal structure and exhibits an ionic conductivity and a method for producing the same.

Brief Description of Drawings

Fig 1 shows X-ray diffraction spectra of sulfide solid electrolytes obtained in Examples 1 to 4 and a sulfide solid electrolyte precursor obtained in Comparative Example 1.
Fig. 2 shows X-ray diffraction spectra of sulfide solid electrolytes obtained in Examples 1 and 5 to 7.
Fig. 3 shows a $^{31}P$-NMR spectrum of a sulfide solid electrolyte obtained in Example 10.
Fig. 4 shows X-ray diffraction spectra of sulfide solid electrolytes obtained in Examples 10 and 11.
Fig. 5 shows an X-ray diffraction spectrum of a sulfide solid electrolyte obtained in Example 12.
Fig. 6 shows Raman spectra of sulfide solid electrolytes obtained in Examples 1 and 13 to 15.
Fig. 7 shows an X-ray diffraction spectrum of a sulfide solid electrolyte obtained in Example 16.
Fig. 8 shows an X-ray diffraction spectrum of a sulfide solid electrolyte obtained in Example 17.
Fig. 9 shows X-ray diffraction spectra of sulfide solid electrolytes obtained in Examples 18 and 19.

Description of Embodiments

An embodiment of the present invention (hereinafter sometimes referred to as "this embodiment") will be described below. In the present description, the upper limit values and the lower limit values relating to the numerical ranges accompanied with "or more", "or less", and "to" are numerical values that can be combined in any combination, and the values in Examples can be used as the upper limit values and the lower limit values.

(Findings that the present inventors have acquired to achieve the present invention)

As a result of intensive and extensive studies for solving the above problem, the present inventors have found the following matters, thus completing the present invention.
As discloses in PTLs 1 to 6 and NPL 1, studies on sulfide solid electrolytes having different compositions have been carried out. Regarding sulfide solid electrolytes, studies on use thereof in vehicle-mounted applications have been carried out, and a sulfide solid electrolyte having more superior performance has been strongly demanded. Thus, at the same time with enhancing the performance of the aforementioned solid electrolytes which have hitherto been studied, development of a solid electrolyte having a novel crystal structure is being more eagerly required.

As a procedure for enhancing the performance of the solid electrolytes that have hitherto studied or for developing a solid electrolyte having a novel crystal structure, major examples include an application of a new metal species, a study on the composition based on a new blending ratio, and a study on various conditions in the production method. The present inventors have also advanced the various studies based on the above development procedures.

PTLs 1 to 6 describe a solid electrolyte containing a lithium atom, a phosphorus atom, and a sulfur atom or a solid electrolyte containing a lithium atom, a phosphorus atom, a sulfur atom, and a halogen atom (a bromine atom, an iodine atom, or the like), the solid electrolyte having a prescribed diffraction peak in powdery X-ray diffractometry (XRD) using CuK$\alpha$ line ($\lambda$=1.5418Å). NPL 1 describes a solid electrolyte containing a lithium atom, a phosphorus atom, a sulfur atom, and a halogen atom (a chlorine atom), the solid electrolyte having a prescribed diffraction peak in powdery X-ray diffractometry (XRD) using MoK$\alpha$ line ($\lambda$=0.7903Å). However, none of the solid electrolytes of the patent documents has a specific diffraction peak that a sulfide solid electrolyte according to a first aspect of this embodiment has, that is, a diffraction peak at 2$\theta$=20.8$\pm$0.5° and 22.7$\pm$0.3° (hereinafter sometimes referred to simply as "specific diffraction peak") in powdery X-ray diffractometry using CuK$\alpha$ line ($\lambda$=1.5418Å).

Regarding the phenomenon that the sulfide solid electrolytes described in PTLs 1 to 6 have no specific diffraction peak, the solid electrolyte described in PTL 1 does not contain a halogen atom as a constituting atom, PTLs 2 to 6 are in common in that a lithium atom, a phosphorus atom, a sulfur atom, and a halogen atom are contained but, for example, Examples in PTLs 2 to 4 are different in that an iodine atom is contained. Accordingly, in the sulfide solid electrolytes described in PTLs 1 to 4, it can be considered that a difference in the kind of the halogen atom has an influence.

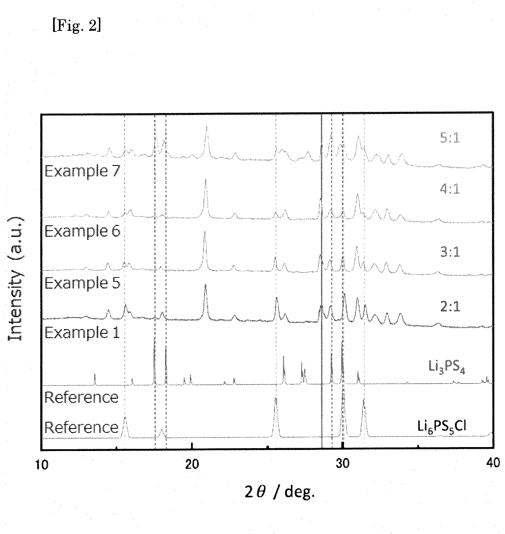

However, the sulfide solid electrolytes described in PTLs 5 and 6 and NPL 1 contain at least one kind of halogen atom selected from a chlorine atom and a bromine atom, and contain the same atomic species as the atoms constituting the sulfide solid electrolyte of this embodiment. Above all, the sulfide solid electrolyte described in NPL 1 has a composition of $Li_{15}P_4S_{16}Cl_3$, which is equivalent to the atomic ratios in Examples described later, but has no specific diffraction peak (see especially Figure 2). Thus, the phenomenon that the sulfide solid electrolytes described in the documents have no specific diffraction peak cannot be explained only by the difference in the constituting atoms.

In conducting the development of a solid electrolyte having a novel crystal structure through an application of a new metal species, a study on the composition based on a new blending ratio, and a study on various conditions in the production method, the present inventors have carried on studies with a focus on a reaction in the solvent (liquid phase). This is because, in the circumstances in which a lithium ion battery using a sulfide solid electrolyte attracts attention and there is a growing need for the mass production thereof as described above, a sulfide solid electrolyte can be produced in a conventional manner and in a large quantity and in addition, a uniform sulfide solid electrolyte is easily produced.

Examples of PTLs 5 and 6 and NPL 1 respectively state that $Li_2S$, $P_2S_5$ and LiCl are reacted, $Li_2S$, $P_2S_5$, LiI, and LiBr are reacted, and $Li_2S$, $P_2S_5$, and LiCl are reacted, by a mechanical milling method using a planetary ball mill to produce a sulfide solid electrolyte.

In contrast, the sulfide solid electrolyte of this embodiment is obtained by adopting a reaction of raw materials in a solvent (liquid phase) which has been studied as described above. Accordingly, it can be said that the difference in whether a mechanical milling method is adopted, that is, whether the reaction is conducted in a solvent (liquid phase) in a reaction in the method for producing the sulfide solid electrolyte also contributes to appearance of the specific diffraction peak.

As a result of the above studies, the present inventors have found that, by allowing a solid electrolyte to contain specific atoms that are a lithium atom, a phosphorus atom, a sulfur atom, and at least one kind of halogen atom selected from a chlorine atom and a bromine atom and by adopting a reaction of raw materials containing the specific atoms in a solvent (liquid phase), the solid electrolyte becomes one having a crystal structure that has heretofore not existed and exhibiting an ionic conductivity.

In the present description, the "solid electrolyte" means an electrolyte that is kept solid at 25°C in nitrogen atmosphere. The "sulfide solid electrolyte" in this embodiment is a solid electrolyte that contains a lithium atom, a sulfur atom, a phosphorus atom, and at least one kind of halogen atom selected from a chlorine atom and a bromine atom, and has an ionic conductivity attributable to the lithium atom.

The "sulfide solid electrolyte" encompasses both of a crystalline sulfide solid electrolyte having a crystal structure and an amorphous sulfide solid electrolyte. In the present description, the crystalline sulfide solid electrolyte is a solid electrolyte that has a peak derived from a solid electrolyte observed in an X-ray diffraction pattern in a powder X-ray diffraction (XRD) measurement regardless of the presence or absence of a peak derived from a raw material of the solid electrolyte therein. In other words, the crystalline solid electrolyte contains a crystal structure derived from a solid electrolyte, and a part thereof may have a crystal structure derived from the solid electrolyte or the whole thereof may have a crystal structure derived from the solid electrolyte. The crystalline sulfide solid electrolyte may contain an amorphous sulfide solid electrolyte (also referred to as "glass component") as a part thereof as long as it has such an X-ray diffraction pattern as above. Accordingly, the crystalline sulfide solid electrolyte encompasses a so-called glass ceramic which is obtained by heating an amorphous solid electrolyte (glass component) to the crystallization temperature or higher.

In the present description, the amorphous sulfide solid electrolyte (glass component) means one having a halo pattern in which any other peak than the peaks derived from the materials is not substantially observed in an X-ray diffraction pattern in an X-ray diffraction (XRD) measurement regardless of the presence or absence of a peak derived from a raw material of the solid electrolyte.

The aforementioned distinction between crystallinity and amorphousity applies to both of a sulfide solid electrolyte and a modified sulfide solid electrolyte in this embodiment.

A sulfide solid electrolyte according to a first aspect of this embodiment is a sulfide solid electrolyte containing a lithium atom, a phosphorus atom, a sulfur atom, and at least one kind of halogen atom selected from a chlorine atom and a bromine atom,
the sulfide solid electrolyte having a diffraction peak at $2\theta=20.8\pm0.5°$ and $22.7\pm0.3°$ in powdery X-ray diffractometry using CuK$\alpha$ line.

As described above, the conventional sulfide solid electrolytes described in PTLs 1 to 6 and NPL 1 do not have a diffraction peak at $2\theta=20.8\pm0.5°$ and $22.7\pm0.3°$ in powdery X-ray diffractometry using CuK$\alpha$ line. Thus, the sulfide solid electrolyte according to the first aspect has a novel crystal structure that the conventional sulfide solid electrolytes have not had.

As shown in Examples, the sulfide solid electrolyte according to the first aspect can exhibit an ionic conductivity due to the novel crystal structure.

A sulfide solid electrolyte according to a second aspect of this embodiment is such that a sulfide solid electrolyte that further has a diffraction peak at at least one position of $2\theta=30.8\pm0.5°$, $31.9\pm0.5°$, and $32.7\pm0.5°$ in powdery X-ray diffractometry using CuK$\alpha$ line.

The sulfide solid electrolyte of this embodiment preferably has a diffraction peak of the second aspect, in addition to the aforementioned specific diffraction peak. In other words, the novel crystal structure that the sulfide solid electrolyte of this embodiment has exhibits at least the specific diffraction peak, and may further exhibit a diffraction peak at at least one position of $2\theta=30.8\pm0.5°$, $31.9\pm0.5°$, and $32.7\pm0.5°$ described above. When the sulfide solid electrolyte of this embodiment has such diffraction peaks, the sulfide solid electrolyte is liable to exhibit an ionic conductivity due to the novel crystal structure.

A sulfide solid electrolyte according to a third aspect of this embodiment is such a sulfide solid electrolyte that further has a diffraction peak at at least one position of $2\theta=14.3\pm0.5°$ and $36.2\pm0.5°$ in powdery X-ray diffractometry using CuK$\alpha$ line.

The sulfide solid electrolyte of this embodiment has at least the aforementioned specific diffraction peak, and in addition to the diffraction peak in the second aspect, may preferably also have a diffraction peak of the third aspect. When the sulfide solid electrolyte of this embodiment has such diffraction peaks, the sulfide solid electrolyte is liable to exhibit a novel ion conductivity due to a novel crystal structure.

A sulfide solid electrolyte according to a fourth aspect of this embodiment is such a sulfide solid electrolyte that has a composition represented by the general formula (I), that is, has a lithium atom, a phosphorus atom, a sulfur atom, and at least one kind of halogen atom selected from a chlorine atom and a bromine atom at a specific ratio.

$$Li_aP_bS_cX_d \qquad (I)$$

(In the general formula (I), X is at least one kind of halogen atom selected from a chlorine atom and a bromine atom, and $3.0\leq a<4.0$, $b=1.0$, $3.5\leq c\leq4.5$, $0.05\leq d<1.0$ are satisfied.)

Details of the general formula (I) will be described later, but when the sulfide solid electrolyte of this embodiment has the atoms in a specific ratio represented by the general formula (I), the sulfide solid electrolyte is liable to exhibit a novel ion conductivity due to a novel crystal structure having the specific diffraction peak.

A sulfide solid electrolyte according to a fifth aspect of this embodiment is such a sulfide solid electrolyte that has a peak in 90.0 to 92.0 ppm in a $^{31}$P-NMR spectrum.

The sulfide solid electrolyte of this embodiment has at least the aforementioned specific diffraction peak, and preferably has a peak in 90.0 to 92.0 ppm in a $^{31}$P-NMR spectrum. When the sulfide solid electrolyte of this embodiment has such a peak in a $^{31}$P-NMR spectrum, the sulfide solid electrolyte is liable to exhibit a novel ion conductivity due to a novel crystal structure.

A method for producing a sulfide solid electrolyte according to a sixth aspect of this embodiment is a method for producing a sulfide solid electrolyte, including

mixing a solvent 1 having a heteroatom and a raw material 1 containing any atom of a lithium atom, a phosphorus atom, and a sulfur atom to prepare a mixture,

preparing a solution that contains a raw material 2 containing at least one kind of halogen atom selected from a chlorine atom and a bromine atom and a solvent 2 having a heteroatom,
mixing the mixture and the solution to prepare a fluid, and
heating the fluid.

A method for producing the sulfide solid electrolyte of this embodiment is not limited as long as the sulfide solid electrolyte has the aforementioned specific diffraction peak, that is, has a novel crystal structure that exhibits the specific diffraction peak. However, as described above, it can also be said that a novel crystal structure that has not been able to be obtained by a reaction with a mechanical milling method is obtained by reacting raw materials in a solvent (liquid phase). In view of this point, it is considered that the sulfide solid electrolyte of this embodiment is liable to be obtained by adopting the production method at least including reacting raw materials in a solvent (liquid phase).

In the method for producing a sulfide solid electrolyte according to the sixth aspect of this embodiment, the solvents 1 and 2 which have a heteroatom are used and the mixture and the solution which contain the solvents are mixed, whereby a reaction of the raw material 1 and the raw material 2 progresses to produce a sulfide solid electrolyte. In other words, this method is characterized in that a reaction of the raw material 1 and the raw material 2 is conducted in a solvent (liquid phase) to produce a sulfide solid electrolyte. As described above, the production method of this embodiment is considerably different, in that raw materials are reacted in a solvent (liquid phase), from the methods described in PTLs 1 to 6 in which raw materials are reacted by a mechanical milling method.

Furthermore, the production method of this embodiment is characterized in that the raw material 1 containing any atom of a lithium atom, a phosphorus atom, and a sulfur atom and the raw material 2 containing a halogen atom are separately used. In other words, the production method of this embodiment is characterized in that the raw material 1 is combined with the solvent 1 having a heteroatom to prepare a mixture, the raw material 2 is combined with the solvent 2 to prepare a solution, and then, the mixture and the solution are mixed.

The reason why a sulfide solid electrolyte that has a novel crystal structure and exhibits an ionic conductivity can be obtained by the production method of this embodiment including such a configuration is not clear, but is presumed as follows.

A mixture is prepared by combining and mixing the raw material 1 and the solvent 1 having a heteroatom, and in the mixture, the raw material 1 itself and a reaction product that is produced with progression of a reaction of the raw material 1 may be contained. In the production method of this embodiment, either of the raw material 1 itself or the reaction product may be contained in the mixture, but the reaction product is preferably contained mainly for a reason described later. In this case, the raw material 1 itself that has not contributed to the production of the reaction product but remains can be contained. Both of the raw material 1 and the reaction product produced by a reaction of the raw material 1 are difficult to dissolve in the solvent 1 having a heteroatom, and in the mixture, the raw material 1, the reaction product, and the solvent 1 may be contained.

The reaction product cannot be completely defined because it is different depending on the types of the raw materials used as the raw material 1. However, for example, in an example in which lithium sulfide and diphosphorus pentasulfide are used as the raw material 1, an example of the reaction product is a substance that has a lithium atom, a phosphorus atom, and a sulfur atom and has, as a main backbone, $Li_3PS_4$ or the like having a $PS_4^{3-}$ structure produced by a reaction of the lithium sulfide and diphosphorus pentasulfide. The substance that has a lithium atom, a phosphorus atom, and a sulfur atom, and has $Li_3PS_4$ or the like as a main backbone has an ionic conductivity attributable to a lithium atom and can be referred to as a solid electrolyte.

The raw material 2 containing a halogen atom is used as a solution in combination with the solvent 2. The raw material 2 containing a halogen atom, for example, a lithium halide as described later generally has a poor reactivity, and it is known that the raw material 2 has a low reactivity with other raw materials used as a raw material of a sulfide solid electrolyte (for example, lithium sulfide and diphosphorus pentasulfide as described above, and the like used as the raw material 1) and a low reactivity with a sulfide solid electrolyte obtained by a reaction of the raw material 1. In the production method of this embodiment, the reactivity of a raw material containing a halogen atom can be enhanced by using the raw material 2 containing a halogen atom in a state dissolved in the solvent 2 having a heteroatom.

In the production method of this embodiment, as described above, any one or both of the raw material 1 itself and a reaction product produced by a reaction of the raw material 1 may be contained in the mixture, but the reaction product is preferably contained for the following reason.

When lithium sulfide and diphosphorus pentasulfide which are described above, for example, are used as the raw material 1, a lithium halide which will be described later, for example, is used as the raw material 2, and the raw material 1 exists as it is, in mixing the mixture containing the raw material 1 (lithium sulfide and diphosphorus pentasulfide) and the solution containing the raw material 2 (lithium halide), at least three raw materials, that is, lithium sulfide, diphosphorus pentasulfide, and the lithium halide, exist in a solvent (liquid phase). On the other hand, when the aforementioned sulfide solid electrolyte having $Li_3PS_4$ or the like having a $PS_4^{3-}$ structure as a main backbone is previously formed by a reaction of lithium sulfide and diphosphorus pentasulfide as the raw material 1, in mixing the mixture and the solution, the substances subjected to the reaction are at least two substances of the sulfide solid electrolyte and the raw material 2 (lithium halide). Thus, when the reaction product produced by a reaction of the raw material 1 is contained, not only a more efficient reaction can be expected, but also a sulfide solid electrolyte having a novel crystal structure that has a higher quality and exhibits an ionic conductivity can be more easily obtained.

When a reaction product produced by a reaction of the raw material 1 is contained in the mixture, by supplying the raw material 2 containing a halogen atom which exists in a state dissolved in a solution and mixing the mixture and the solution, deposition is liable to occur in some form, for example, in the form where the raw material 2 is taken in the main backbone of the reaction product produced by a reaction of the raw material 1 or in the form where a complex is formed.

Here, the deposition in some form can be confirmed by comparison of Examples 1 to 4 and the reaction product produced by a reaction of the raw material 1 with Comparative Example 1. In Comparative Example 1, when a powder obtained by mixing the mixture and the solution, followed only by drying was subjected to powdery X-ray diffractometry, it was found that the powder did not have the specific diffraction peak but had diffraction peaks different also from the diffraction peaks of a reaction product ($Li_3PS_4$) by a reaction of the raw material 1. That is, the powder obtained in Comparative Example 1 is not the sulfide solid electrolytes of Example 1 to 4 and is also different from the reaction product ($Li_3PS_4$) produced by a reaction of the raw material 1, but can be referred to as "sulfide solid electrolyte precursor". Accordingly, a powder contained in the fluid obtained by mixing of the mixture and the dissolution can be said to be a substance in which the raw material 2 is taken in the main backbone of the sulfide solid electrolyte obtained by a reaction of the raw materials 1, a complex is formed, or otherwise, deposition occurs in some form.

Thus, the production method of this embodiment includes heating the fluid obtained by mixing of the mixture and the dissolution. It is considered that, by including heating, the solvents 1 and 2 that are deposited on the "sulfide solid electrolyte precursor" in some form are removed, whereby a novel crystal structure is formed and a sulfide solid electrolyte that exhibits an ionic conductivity can be obtained. In addition, since the solvents 1 and 2 that are not taken in the sulfide solid electrolyte precursor are also removed by heating, a powder of the sulfide solid electrolyte can be obtained. Note that removal of the solvents 1 and 2 can be achieved by drying. Details of the drying will be described later.

A method for producing a sulfide solid electrolyte according to a seventh aspect of this embodiment is such a method in which the heating is performed at a heating temperature of 130°C or higher and 600°C or lower.

As described above, a crystalline sulfide solid electrolyte can be obtained by the heating, and when the heating temperature is 130°C or higher and 600°C or lower, a crystalline sulfide solid electrolyte that has a novel crystal structure and exhibits an ionic conductivity can be efficiently produced.

A method for producing a sulfide solid electrolyte according to an eighth aspect of this embodiment is such a method in which the raw material 1 contains lithium sulfide and phosphorus sulfide.

By adopting lithium sulfide and phosphorus sulfide as the raw material 1, a sulfide solid electrolyte that has a novel crystal structure and exhibits an ionic conductivity is liable to be obtained.

A method for producing a sulfide solid electrolyte according to a nineth aspect of this embodiment is such a method in which the lithium sulfide is used in an amount of 60% by mole or more and 80% by mole or less relative to the total amount of the lithium sulfide and the phosphorus sulfide.

In the method for producing a sulfide solid electrolyte according to the nineth aspect in which lithium sulfide and phosphorus sulfide are adopted as the raw material 1 when the amount of lithium sulfide used is 60% by mole or more and 80% by mole or less, a sulfide solid electrolyte that has a novel crystal structure and exhibits an ionic conductivity is liable to be obtained.

A method for producing a sulfide solid electrolyte according to a tenth aspect of this embodiment is such a method in which the raw material 2 contains at least one lithium halide selected from lithium chloride and lithium bromide.

By adopting such a lithium halide as the raw material 2, a sulfide solid electrolyte that has a novel crystal structure and exhibits an ionic conductivity is liable to be obtained. In addition, as described above, a lithium halide, especially lithium bromide, is known to be poor in the reactivity, but is easily dissolved in the solvent 2 having a heteroatom. By using a lithium halide in a solution, the reactivity can be enhanced, and thus, a reaction of the raw material 2 (lithium halide) with the sulfide solid electrolyte which is obtained by a reaction of the raw materials 1 contained in the mixture is liable to progress.

Accordingly, the use of a lithium halide as the raw material 2 is also effective in that an advantage of the production method of this embodiment can be taken.

A method for producing a sulfide solid electrolyte according to an eleventh aspect of this embodiment is such a method in which the raw material 2 is used in an amount of 4.5% by mole or more and 25.0% by mole or less relative to the total amount of the raw material 1 and the raw material 2.

When the amount of the raw material 1 and the raw material 2 used relative to the total amount of the raw material 2 is in the above range, a sulfide solid electrolyte that has a novel crystal structure and exhibits an ionic conductivity is more liable to be obtained.

A method for producing a sulfide solid electrolyte according to a twelfth aspect of this embodiment is such a method in which the solvent 1 contains at least one solvent selected from a solvent having a nitrogen atom and a solvent having an oxygen atom.

By using at least one solvent selected from a solvent having a nitrogen atom and a solvent having an oxygen atom as the solvent 1 having a heteroatom, that is, by using a solvent containing at least one kind of atom selected from a nitrogen atom and an oxygen atom as the heteroatom, the reaction of the raw material 1 is liable to progress, and, for example, when lithium sulfide and diphosphorus pentasulfide are used as the raw material 1, a sulfide solid electrolyte having $Li_3PS_4$ or the like having a $PS_4{}^{3-}$ structure as a main backbone is liable to be previously formed. The reaction with the raw material 2 is also liable to progress. As a result, a sulfide solid electrolyte that has a novel crystal structure and exhibits an ionic conductivity is liable to be more efficiently obtained.

A method for producing a sulfide solid electrolyte according to a thirteenth aspect of this embodiment is such a method in which the solvent having a nitrogen atom which is preferably used as the solvent 1 is a nitrile solvent.

When a nitrile solvent is used as the solvent having a nitrogen atom, the aforementioned effect provided in the case where at least one solvent selected from a solvent having a nitrogen atom and a solvent having an oxygen atom is used as the solvent 1 is more liable to be achieved.

A method for producing a sulfide solid electrolyte according to a fourteenth aspect of this embodiment is such a method in which the solvent having an oxygen atom which is preferably used as the solvent 1 is an ether solvent.

When an ether solvent is used as the solvent having an oxygen atom, the aforementioned effect provided in the case where at least one solvent selected from a solvent having a nitrogen atom and a solvent having an oxygen atom is used as the solvent 1 is more liable to be achieved.

A method for producing a sulfide solid electrolyte according to a fifteenth aspect of this embodiment is such a method in which in preparing the mixture, the solvent 1 is used in amount of 2 parts by mass or more and 50 parts by mass or less relative to 1 part by mass of the raw material 1.

When the amount of the solvent 1 used relative to the raw material 1 is in the above range, the aforementioned effect provided in the case where at least one solvent selected from a solvent having a nitrogen atom and a solvent having an oxygen atom is used as the solvent 1 is more liable to be achieved.

A method for producing a sulfide solid electrolyte according to a sixteenth aspect of this embodiment is such a method in which the solvent 2 contains at least one solvent selected from a solvent having a nitrogen atom and a solvent having an oxygen atom.

By using at least one solvent selected from a solvent having a nitrogen atom and a solvent having an oxygen atom as the solvent 2 having a heteroatom, that is, by using a solvent containing at least one kind of atom selected from a nitrogen atom and an oxygen atom as the heteroatom, a reaction between the raw material 1 itself or a reaction product produced by a reaction of the raw material 1 and the raw material 2 is liable to progress. As a result, a sulfide solid electrolyte that has a novel crystal structure and exhibits an ionic conductivity is liable to be more efficiently obtained.

A method for producing a sulfide solid electrolyte according to a seventeenth aspect of this embodiment is such a method in which the solvent having a nitrogen atom which is preferably used as the solvent 2 is a nitrile solvent.

When a nitrile solvent is used as the solvent having a nitrogen atom, the aforementioned effect provided in the case where a solvent having a nitrogen atom is used as the solvent 2 is more liable to be achieved.

A method for producing a sulfide solid electrolyte according to an eighteenth aspect of this embodiment is such a method in which the solvent having an oxygen atom which is preferably used as the solvent 2 is at least one solvent selected from an ether solvent and an alcohol solvent.

When at least one of an ether solvent and an alcohol solvent is used as the solvent having an oxygen atom, the aforementioned effect provided in the case where a solvent having an oxygen atom is used as the solvent 2 is more liable to be achieved.

A method for producing a sulfide solid electrolyte according to a nineteenth aspect of this embodiment is such a method in which the solvent 2 is used in an amount of 0.1 parts by mass or more and 100 parts by mass or less relative to 1 part by mass of the raw material 2.

When the amount of the solvent 2 used relative to the raw material 2 is in the above range, the aforementioned effect provided in the case where a solvent having an oxygen atom is used as the solvent 2 is more liable to be achieved.

[Sulfide solid electrolyte]

The sulfide solid electrolyte of this embodiment is

a sulfide solid electrolyte containing a lithium atom, a phosphorus atom, a sulfur atom, and at least one kind of halogen atom selected from a chlorine atom and a bromine atom,
the sulfide solid electrolyte having a diffraction peak at $2\theta=20.8\pm0.5°$ and $22.7\pm0.3°$ in powdery X-ray diffractometry using CuK$\alpha$ line.

(Novel crystal structure)

The sulfide solid electrolyte of this embodiment has a diffraction peak at $2\theta=20.8\pm0.5°$ and $22.7\pm0.3°$ in powdery X-ray diffractometry using $CuK\alpha$ line. As described above, any conventional sulfide solid electrolyte does not have a diffraction peak at $2\theta=20.8\pm0.5°$ and $22.7\pm0.3°$. Accordingly, the crystal structure that exhibits such a diffraction peak is a novel crystal structure that any conventional sulfide solid electrolyte does not have. As described above, the sulfide solid electrolyte of this embodiment has a novel crystal structure that exhibits such a specific diffraction peak and can exhibit an ionic conductivity.

Besides the specific diffraction peak, the sulfide solid electrolyte of this embodiment preferably further has a diffraction peak at at least one position of $2\theta=30.8\pm0.5°$, $31.9\pm0.5°$, and $32.7\pm0.5°$, and more preferably further has a diffraction peak at at least one position of $2\theta=14.3\pm0.5°$ and $36.2\pm0.5°$.

When the sulfide solid electrolyte of this embodiment has, besides the specific diffraction peak, such diffraction peaks as described above, that is, when the novel crystal structure that the sulfide solid electrolyte of this embodiment has exhibits, besides the specific diffraction peak, such diffraction peaks as described above, an ionic conductivity is liable to be exhibited.

The sulfide solid electrolyte of this embodiment preferably has a peak at 90.0 to 92.0 ppm in a $^{31}$P-NMR spectrum, that is, the novel crystal structure that the sulfide solid electrolyte of this embodiment has preferably exhibits a peak at 90.0 to 92.0 ppm in a $^{31}$P-NMR spectrum. In the present description, a peak in a $^{31}$P-NMR spectrum is measured, for example, by a method described in the section of Examples.

When the sulfide solid electrolyte of this embodiment has at least the aforementioned specific diffraction peak and preferably has the aforementioned peak in a $^{31}$P-NMR spectrum, the sulfide solid electrolyte is liable to exhibit a novel ion conductivity due to a novel crystal structure.

The peak in a $^{31}$P-NMR spectrum is preferably at 90.3 ppm or higher, more preferably at 90.5 ppm or higher, and the upper limit is preferably at 91.8 ppm or lower, more preferably at 91.5 ppm or lower.

The peak in a $^{31}$P-NMR spectrum may vary depending on the kind of the halogen atom, but whether the halogen atom is a chlorine atom or a bromine atom, the peak due to the novel crystal structure is in the above range.

(Composition of sulfide solid electrolyte)

The sulfide solid electrolyte of this embodiment has a lithium atom, a phosphorus atom, a sulfur atom, and at least one kind of halogen atom selected from a chlorine atom and a bromine atom. The sulfide solid electrolyte of this embodiment can have the aforementioned novel crystal structure as long as it has these atoms, but from the viewpoint of having the novel crystal structure and easily exhibiting an ionic conductivity, the sulfide solid electrolyte preferably has a composition represented by the following general formula (I).

$$Li_aP_bS_cX_d \qquad (I)$$

(In the general formula (I), X is at least one kind of halogen atom selected from a chlorine atom and a bromine atom, and $3.0\leq a<4.0$, $b=1.0$, $3.5\leq c\leq4.5$, and $0.05\leq d<1.0$ are satisfied.)

In the general formula (1), a, c, and d are preferably in the following ranges since an ion conductivity is then liable to be exhibited due to the novel crystal structure having the aforementioned specific diffraction peak. In this embodiment, the composition of the atoms constituting the sulfide solid electrolyte can be adjusted by a blending ratio of the raw materials used in producing the sulfide solid electrolyte. The blending ratio of raw materials will be described in the section of "Method for producing a sulfide solid electrolyte".

In the general formula (I), a is preferably 3.10 or more, more preferably 3.15 or more, further preferably 3.19 or more, furthermore preferably 3.22 or more, and the upper limit is preferably 3.80 or less, more preferably 3.70 or less, further preferably 3.60 or less, furthermore preferably 3.35 or less.

c is preferably 3.60 or more, more preferably 3.75 or more, further preferably 3.90 or more, and the upper limit is preferably 4.40 or less, more preferably 4.25 or less, further preferably 4.10 or less.

d is preferably 0.10 or more, more preferably 0.15 or more, further preferably 0.20 or more, furthermore preferably 0.22 or more, and the upper limit is preferably 0.80 or less, more preferably 0.70 or less, further preferably 0.60 or less, furthermore preferably 0.55 or less.

The sulfide solid electrolyte of this embodiment has a novel crystal structure as described above, and has the following amorphous sulfide solid electrolyte and crystalline sulfide solid electrolyte as a basic structure.

(Amorphous sulfide solid electrolyte)

The amorphous sulfide solid electrolyte that the sulfide solid electrolyte of this embodiment may have as a basic structure contains a lithium atom, a phosphorus atom, a sulfur atom, and at least one kind of halogen atom selected from a chlorine atom and a bromine atom, and typical preferred examples thereof include a solid electrolyte constituted of a lithium sulfide, a phosphorus sulfide, and a lithium halide, such as $Li_2S\text{-}P_2S_5\text{-}LiCl$, $Li_2S\text{-}P_2S_5\text{-}LiBr$, or $Li_2S\text{-}P_2S_5\text{-}LiCl\text{-}LiBr$; and a solid electrolyte further containing an oxygen atom, a silicon atom, or other atoms, such as $Li_2S\text{-}P_2S_5\text{-}Li_2O\text{-}LiCl$, $Li_2S\text{-}P_2S_5\text{-}Li_2O\text{-}LiBr$, $Li_2S\text{-}SiS_2\text{-}P_2S_5\text{-}LiCl$, or $Li_2S\text{-}SiS_2\text{-}P_2S_5\text{-}LiBr$. From the viewpoint of achieving a higher ionic conductivity, a solid electrolyte constituted of a lithium sulfide, a phosphorus sulfide, and a lithium halide, such as $Li_2S\text{-}P_2S_5\text{-}LiCl$, $Li_2S\text{-}P_2S_5\text{-}LiBr$, or $Li_2S\text{-}P_2S_5\text{-}LiCl\text{-}LiBr$, is preferred.

The kinds of the atoms constituting the amorphous sulfide solid electrolyte can be found, for example, by an ICP emission spectrophotometer.

The shape of the amorphous sulfide solid electrolyte is not particularly limited, and an example thereof is granular. The average particle diameter ($D_{50}$) of the granular amorphous sulfide solid electrolyte can be, for example, within a range of 0.01 $\mu$m to 500 $\mu$m or 0.1 to 200 $\mu$m.

In the present description, the average particle diameter ($D_{50}$) is a particle diameter to reach 50% of all of the particles in sequential cumulation from particles of the smallest particle size in drawing a particle size distribution cumulative curve, and the volumetric distribution is an average particle diameter which can be measured, for example, using a laser diffraction/scattering particle size distribution analyzer.

(Crystalline sulfide solid electrolyte)

The crystalline sulfide solid electrolyte that the sulfide solid electrolyte of this embodiment may have as a basic structure may be a so-called glass ceramic which is obtained by heating an amorphous solid electrolyte to the crystallization temperature or higher, and examples of the crystal structure thereof include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around $2\theta = 20.2°$ and around 23.6° (see, for example, JP 2013-16423 A).

Examples of the crystal structure also include an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725).

Among them, the crystal structure of the crystalline sulfide solid electrolyte is preferably a thio-LISICON Region II-type crystal structure in that a higher ionic conductivity can be obtained. Here, the "thio-LISICON Region II-type crystal structure" expresses any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure. In addition, the crystalline sulfide solid electrolyte may have the thio-LISICON Region II-type crystal structure or may have the thio-LISICON Region II-type crystal structure as a main crystal, and from the viewpoint of achieving a higher ionic conductivity, the crystalline sulfide solid electrolyte preferably has the thio-LISICON Region II-type crystal structure as a main crystal. In the present description, the phrase "having as a main crystal" means that the percentage of the subject crystal structure in the crystal structure is 80% or more, preferably 90% or more, and more preferably 95% or more.

In the X-ray diffractometry using a CuK$\alpha$ line, the $Li_3PS_4$ crystal structure gives diffraction peaks, for example, at around $2\theta = 17.5°$, 18.3°, 26.1°, 27.3°, and 30.0°; the $Li_4P_2S_6$ crystal structure gives diffraction peaks, for example, at around $2\theta = 16.9°$, 27.1°, and 32.5°; the $Li_7PS_6$ crystal structure gives diffraction peaks, for example, at around $2\theta = 15.3°$, 25.2°, 29.6°, and 31.0°; the $Li_7P_3S_{11}$ crystal structure gives diffraction peaks, for example, at around $2\theta = 17.8°$, 18.5°, 19.7°, 21.8°, 23.7°, 25.9°, 29.6°, and 30.0°; the $Li_{4-x}Ge_{1-x}P_xS_4$-based thio-LISICON Region II-type crystal structure gives diffraction peaks, for example, at around $2\theta = 20.1°$, 23.9°, and 29.5°; and the crystal structure similar to the $Li_{4-x}Ge_{1-x}P_xS_4$-based thio-LISICON Region II-type crystal structure gives diffraction peaks, for example, at around $2\theta = 20.2$ and 23.6°. The position of these peaks may vary within a range of $\pm 0.5°$.

As described above, when a thio-LISICON Region II-type crystal structure is obtained in this embodiment, crystalline $Li_3PS_4$ ($\beta$-$Li_3PS_4$) is preferably not contained. The sulfide solid electrolyte obtained by the production method of this embodiment has no diffraction peaks at $2\theta = 17.5°$ and 26.1 ° which are given by crystalline $Li_3PS_4$, or, if has them, only peaks that are quite smaller than the diffraction peaks of a thio-LISICON Region II-type crystal structure are detected.

The crystal structures having the $Li_7PS_6$ structural backbone in which P is partially substituted with Si represented by compositional formulae $Li_{7-x}P_{1-y}Si_yS_6$ and $Li_{7+x}P_{1-y}Si_yS_6$ (x is -0.6 to 0.6, y is 0.1 to 0.6) are a cubic crystal or an orthorhombic crystal, and preferably a cubic crystal, and have peaks mainly appearing at positions of $2\theta = 15.5°$, 18.0°, 25.0°, 30.0°, 31.4°, 45.3°, 47.0°, and 52.0° in the X-ray diffractometry using a CuK$\alpha$ line. The crystal structure represented by the compositional formula $Li_{7-x-2y}PS_{6-x-y}Cl_x$ ($0.8\leq x\leq 1.7$, $0<y\leq -0.25x+0.5$) is preferably a cubic crystal, and has peaks mainly appearing at positions of $2\theta = 15.5°$, 18.0°, 25.0°, 30.0°, 31.4°, 45.3°, 47.0°, and 52.0° in the X-ray diffractometry using a CuK$\alpha$ line. The crystal structure represented by the compositional formula $Li_{7-x}PS_{6-x}Ha_x$ (Ha is Cl or Br, x is preferably 0.2 to 1.8) is preferably a cubic crystal, and has peaks mainly appearing at positions of $2\theta = 15.5°$, 18.0°, 25.0°, 30.0°, 31.4°, 45.3°, 47.0°, and 52.0° in the X-ray diffractometry using a CuKα line. Such a crystal structure basically having a $Li_7PS_6$ structural backbone is also referred to as an argyrodite-type crystal structure.

The positions of the peaks may vary within the range of ±0.5°.

The shape of the crystalline sulfide solid electrolyte is not particularly limited, and an example thereof is granular. The average particle diameter ($D_{50}$) of the granular crystalline sulfide solid electrolyte can be, for example, within the range of 0.01 μm to 500 μm or 0.1 to 200 μm.

[Production of sulfide solid electrolyte]

Next, the method for producing a sulfide solid electrolyte of this embodiment will be described.

The method for producing a sulfide solid electrolyte of this embodiment includes

mixing a solvent 1 having a heteroatom and a raw material 1 containing any atom of a lithium atom, a phosphorus atom, and a sulfur atom to prepare a mixture,
preparing a solution that contains a raw material 2 containing at least one kind of halogen atom selected from a chlorine atom and a bromine atom and a solvent 2 having a heteroatom, and
mixing the mixture and the solution.

(Raw material 1)

Raw materials used in the production method of this embodiment are divided into a raw material 1 and a raw material 2.

The raw material 1 contains any atom of a lithium atom, a phosphorus atom, and a sulfur atom. In view of the availability or the like, the raw material 1 preferably contains two or more raw materials.

Typical examples of the raw material 1 include lithium sulfide; and phosphorus sulfides, such as diphosphorus trisulfide ($P_2S_3$) and diphosphorus pentasulfide ($P_2S_5$). In addition, a compound containing any atom of a lithium atom, a phosphorus atom, and a sulfur atom as described above, and containing any other atom than the above atoms, more specifically, lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfides ($SnS$, $SnS_2$), aluminum sulfide, and zinc sulfide; and phosphoric acid compounds, such as sodium phosphate and lithium phosphate, can also be exemplified.

Among them, in view of easiness of obtaining a sulfide solid electrolyte that has a novel crystal structure and exhibits an ionic conductivity, lithium sulfide and phosphorus sulfides, such as diphosphorus trisulfide ($P_2S_3$) and diphosphorus pentasulfide ($P_2S_5$), are preferred, and among phosphorus sulfides, diphosphorus pentasulfide is preferred.

(Raw material 2)

The raw material 2 contains at least one kind of halogen atom selected from a chlorine atom and a bromine atom.

Preferred examples of the raw material 2 include lithium halides, such as lithium chloride and lithium bromide; alkali metal halides, for example, sodium halides, such as sodium chloride and sodium bromide; phosphorus halides, such as various phosphorus chlorides ($PCl_3$, $PCl_5$, $P_2Cl_4$) and various phosphorus bromide ($PBr_3$, $PBr_5$); thiophosphoryl halides, such as thiophosphoryl chloride ($PSCl_3$) and thiophosphoryl bromide ($PSBr_3$); and halogen simple substances, such as chlorine ($Cl_2$) and bromine ($Br_2$).

Among them, in view of easiness of obtaining a sulfide solid electrolyte that has a novel crystal structure and exhibits an ionic conductivity, a lithium halide is preferred, and as the lithium halide, at least one selected from lithium chloride and lithium bromide is preferably used.

Any other raw material than the above material can also be used.

For example, lithium halides, such as lithium fluoride and lithium iodide; alkali metal halides, for example, sodium halides, such as sodium iodide and sodium fluoride; phosphorus halides, such as various phosphorus fluoride ($PF_3$, $PF_5$) and various phosphorus iodide ($PI_3$, $P_2I_4$); thiophosphoryl halides, such as thiophosphoryl fluoride ($PSF_3$), thiophosphoryl iodide ($PSI_3$), thiophosphoryl dichloride fluoride ($PSCl_2F$), and thiophosphoryl dibromide fluoride ($PSBr_2F$), and halogen simple substances, such as fluorine ($F_2$) and iodine ($I_2$), which all contains any other halogen atom than a chlorine atom and a bromine atom can also be used.

An example of the raw material that can be used as the other raw material than the above materials is a compound containing at least one kind of atom selected from the aforementioned four kinds of atoms and containing any other atom than the aforementioned four kinds of atoms. More specific examples include lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfide (SnS, SnS$_2$), aluminum sulfide, and zinc sulfide; phosphoric acid compounds, such as sodium phosphate and lithium phosphate; metal halides (in this case, the halogen atom is a chlorine atom or a bromine atom), such as an aluminum halide, a silicon halide, a germanium halide, an arsenic halide, a selenium halide, a tin halide, an antimony halide, a tellurium halide, and a bismuth halide; and phosphorus oxyhalides, such as phosphorus oxychloride (POCl$_3$) and phosphorus oxybromide (POBr$_3$).

(Blending ratio of raw materials)

When lithium sulfide and phosphorus sulfide are used as the raw material 1, the amount of lithium sulfide used relative to the total amount of lithium sulfide and phosphorus sulfide is preferably 60% by mole or more, more preferably 65% by mole or more, further preferably 68% by mole or more, and the upper limit is preferably 80% by mole or less, more preferably 78% by mole or less, further preferably 76% by mole or less.

When the amount of lithium sulfide used is within the above range, a sulfide solid electrolyte that has a novel crystal structure and exhibits an ionic conductivity is liable to be obtained.

The amount of the raw material 2 used relative to the total amount of the raw material 1 and the raw material 2 is preferably 4.5% by mole or more, more preferably 8.0% by mole or more, further preferably 10.0% by mole or more, and the upper limit is preferably 25.0% by mole or less, more preferably 23.0% by mole or less, further preferably 20.0% by mole or less. When the amount of the raw material 2 used is within the above range, a sulfide solid electrolyte that has a novel crystal structure and exhibits an ionic conductivity is liable to be obtained.

The above amount of the raw material 2 used is especially suitably applied when lithium sulfide and phosphorus sulfide are used as the raw material 1 and a lithium halide is used as the raw material 2.

When lithium sulfide and diphosphorus pentasulfide are used as the raw material 1 and all the raw material 1 reacts to give a reaction product (for example, the aforementioned solid electrolyte having Li$_3$PS$_4$ or the like as a main backbone), the amount of the raw material 2 used relative to the reaction product produced by the reaction of the raw material 1 is preferably 5.0% by mole or more, more preferably 9.5% by mole or more, further preferably 12.0% by mole or more, furthermore preferably 15.0% by mole or more, and the upper limit is preferably less than 50.0% by mole, more preferably 45.0% by mole or less of the raw material 1, further preferably 40.0% by mole or less, furthermore preferably 35.0% by mole or less. When the amount of the raw material 2 used relative to the reaction product is in the above range, a sulfide solid electrolyte that has a novel crystal structure and exhibits an ionic conductivity is liable to be obtained.

The aforementioned amount of the raw material 2 used can be especially suitably applied when a lithium halide is used as the raw material 2.

(Solvent having a heteroatom)

In the production method of this embodiment, a solvent having a heteroatom is used, and a solvent that is used in combination with the raw material 1 is referred to as a solvent 1 and a solvent that is used in combination with the raw material 2 is as a solvent 2.

Preferred examples of the solvent having a heteroatom include solvents having a nitrogen atom, an oxygen atom, a sulfur atom, and a halogen atom, as a heteroatom.

Examples of the solvent having a nitrogen atom as a heteroatom include solvents having a group containing a nitrogen atom, such as an amino group, an amido group, a nitro group, or a nitrile group.

Preferred examples of the solvent having an amino group include aliphatic amines, such as ethylenediamine, diaminopropane, dimethylethylenediamine, diethylethylenediamine, dimethyldiaminopropane, tetramethyldiaminomethane, tetramethylethylenediamine (TMEDA), and tetramethyldiaminopropane (TMPDA); alicyclic amines, such as cyclopropanediamine, cyclohexanediamine, and bisaminomethylcyclohexane; heterocyclic amines, such as isophoronediamine, piperazine, dipiperidylpropane, and dimethylpiperazine; aromatic amines, such as phenyldiamine, tolylenediamine, naphthalenediamine, methylphenylenediamine, dimethylnaphthalenediamine, dimethylphenylenediamine, tetramethylphenylenediamine, and tetramethylnaphthalenediamine.

Examples of the solvent having an amide group include amide-based organic solvents, such as dimethylformamide, diethylformamide, dimethylacetamide, methoxydimethylpropanamide, hexamethylphosphoric triamide, hexamethylphosphorous triamide, and N-methylpyrrolidone.

An example of the solvent having a nitro group is a nitro-based organic solvent, such as nitrobenzene, and preferred examples of the solvent having a nitrile group include nitrile solvents, such as acetonitrile, methoxyacetonitrile, acrylonitrile, propionitrile, isobutyronitrile, methoxypropionitrile, and benzonitrile.

Preferred examples of the solvent having an oxygen atom as a heteroatom include an ether solvent, an ester solvent, an alcohol solvent, an aldehyde solvent, and a ketone solvent.

Examples of the ether solvent include aliphatic ethers, such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol, and triethylene glycol; alicyclic ethers, such as ethylene oxide, propylene oxide, tetrahydrofuran, tetrahydropyran, dimethoxytetrahydrofuran, cyclopentyl methyl ether, and dioxane; heterocyclic ethers, such as furan, benzofuran, and benzopyran; and aromatic ethers, such as methyl phenyl ether (anisole), ethyl phenyl ether, dibenzyl ether, and diphenyl ether.

Preferred examples of the ester solvent include aliphatic esters, such as methyl formate, ethyl formate, methyl acetate, ethyl acetate, propyl acetate, isopropyl acetate; methyl propionate, ethyl propionate, dimethyl oxalate, diethyl oxalate, dimethyl malonate, diethyl malonate, dimethyl succinate, and diethyl succinate; alicyclic esters, such as methyl cyclohexanecarboxylate, ethyl cyclohexanecarboxylate, and dimethyl cyclohexanedicarboxylate; heterocyclic esters, such as methyl pyridinecarboxylate, methyl pyrimidinecarboxylate, acetolactone, propiolactone, butyrolactone, and valerolactone; and aromatic esters, such as methyl benzoate, ethyl benzoate, dimethyl phthalate, diethyl phthalate, butylbenzyl phthalate, dicyclohexyl phthalate, trimethyl trimellitate, and triethyl trimellitate.

Preferred examples of the solvent include alcohol solvents, such as methanol, ethanol, propanol, butanol, hexanol, cyclohexanol, ethylene glycol, propylene glycol, and butanediol; aldehyde solvents, such as formaldehyde, acetaldehyde, and dimethylformamide; and ketone solvents, such as acetone and methyl ethyl ketone.

Examples of the solvent containing a halogen atom as a heteroatom include carbon tetrachloride, dichloromethane, chlorobenzene, trifluoromethylbenzene, chlorobenzene, chlorotoluene, and bromobenzene.

Examples of the solvent containing a sulfur atom include dimethylsulfoxide, diethylsulfoxide, dipropylsulfoxide, diisopropylsulfoxide, dibutylsulfoxide, diisobutylsulfoxide, diisopentylsulfoxide, methylethylsulfoxide, methylbutylsulfoxide, and carbon disulfide.

(Solvent 1 having a heteroatom)

As the solvent 1 having a heteroatom which is used in combination with the raw material 1, any one appropriately selected from the solvents having a heteroatom exemplified above can be adopted. Among the solvents exemplified above, as the solvent 1 having a heteroatom, the solvent having a nitrogen atom and the solvent having an oxygen atom are preferred. In this embodiment, one of the solvents may be used alone or two or more thereof may be used in combination. As the solvent having a nitrogen atom, a nitrile solvent is preferred, and above all, acetonitrile is preferred. In addition, as the solvent having an oxygen atom, an ether solvent and an ester solvent are preferred, and above all, tetrahydrofuran and ethyl acetate are preferred.

When those solvents are adopted as the solvent 1, the reaction product produced by a reaction of the raw material 1 is liable to be previously formed, and thus, not only a more efficient reaction is expected but also a sulfide solid electrolyte that has a novel crystal structure and exhibits an ionic conductivity with a higher quality can be more easily obtained.

From the same point of view, the amount of the solvent 1 used relative to 1 part by mass of the raw material 1 is preferably 2 parts by mass or more, more preferably 5 parts by mass or more, further preferably 10 parts by mass or more, and the upper limit is preferably 50 parts by mass or less, more preferably 30 parts by mass or less, further preferably 15 parts by mass or less

(Solvent 2 having a heteroatom)

As the solvent 2 having a heteroatom which is used in combination with the raw material 2, any one appropriately selected from the solvents having a heteroatom exemplified above can be adopted. Among the solvents exemplified above, as the solvent 2 having a heteroatom, the solvent having a nitrogen atom and the solvent having an oxygen atom are preferred. In this embodiment, one of the solvents may be used alone or two or more thereof may be used in combination. As the solvent having a nitrogen atom, a nitrile solvent is preferred, and above all, acetonitrile is preferred. As the solvent having an oxygen atom, ether solvent and an alcohol solvent are preferred, and above all, tetrahydrofuran and ethanol are preferred.

When those solvents are adopted as the solvent 2, a reaction between the raw material 1 itself or the reaction product produced by a reaction of the raw material 1 and the raw material 2 is liable to progress. As a result, a sulfide solid electrolyte that has a novel crystal structure and exhibits an ionic conductivity is liable to be more efficiently obtained.

From the same point of view, the amount of the solvent 2 used relative to 1 part by mass of the raw material 2 is preferably 0.1 parts by mass or more, more preferably 1 parts by mass or more, further preferably 3 parts by mass or more, furthermore preferably 5 parts by mass or more, and the upper limit is preferably 100 parts by mass or less, more preferably 50 parts by mass or less, further preferably 30 parts by mass or less, furthermore preferably 20 parts by mass or less.

(Other solvent)

In the production method of this embodiment, any other solvent than the solvents 1 and 2 having a heteroatom, for example, a solvent having no heteroatom can also be used.

Examples of the solvent having no heteroatom include hydrocarbon solvents, such as an aliphatic hydrocarbon solvent, an alicyclic hydrocarbon solvent, and an aromatic hydrocarbon solvent.

Examples of the aliphatic hydrocarbon include hexane, pentane, 2-ethylhexane, heptane, octane, decane, undecane, dodecane, and tridecane. Examples of the alicyclic hydrocarbon include cyclohexane and methylcyclohexane. Examples of the aromatic hydrocarbon solvent include benzene, toluene, xylene, mesitylene, ethylbenzene, and tertbutylbenzene.

When the above other solvent is used, the solvent may be used in combination with the raw material 1 and the solvent 1, or may be used in combination with the raw material 2 and the solvent 2.

The amount of the other solvent used may be determined according to the aforementioned amount of the solvent 1 used when used in combination of the raw material 1 and the solvent 1, and may be determined according to the aforementioned amount of the solvent 2 used when used in combination with the raw material 2 and the solvent 2.

(Preparing a mixture)

In the production method of this embodiment, the mixture is prepared by mixing the solvent 1 having a heteroatom and the raw material 1 containing any atom of a lithium atom, a phosphorus atom, and a sulfur atom. Depending on the type of the raw material used as the raw material 1, a raw material containing any atom of a lithium atom, a phosphorus atom, and a sulfur atom generally has a property of hardly dissolving in a solvent having a heteroatom. Accordingly, raw materials used as the raw material 1 and the solvent 1 having a heteroatom are contained in the mixture.

By performing the mixing, a reaction of the raw material 1 may occur, and thus, the reaction product produced by the reaction of the raw material 1 may be contained. When the mixture contains the reaction product, as described above, not only a more efficient reaction is expected but also a sulfide solid electrolyte that has a novel crystal structure and exhibits an ionic conductivity with a higher quality is more easily obtained.

The mixing of the solvent 1 and the raw material 1 can be performed, for example, by using a mixer for the materials, or can also be performed by using a stirrer or the like. This is because mixing of the raw material 1 can also be achieved with a stirrer. When a pulverizer is used, pulverization of the raw material 1 occurs, but mixing also simultaneously occurs. A method for performing mixing accompanied with pulverization is a method that has been conventionally adopted as a mechanical milling method (solid phase method). However, in the production method of this embodiment, since a reaction in a solvent (liquid phase) is carried out, use of a pulverizer is not preferable. In addition, also in view of the fact that a novel crystal structure is not exhibited when a mechanical milling method is adopted as described above, in the production method of this embodiment, use of a pulverizer is not preferable. Accordingly, in the production method of this embodiment, the mixing of the solvent 1 and the raw material 1 is preferably performed by using a machine that is referred to as a mixer or a stirrer. it can also be said that, although mixing of the solvent 1 and the raw material 1 can be performed by a treatment of stirring, mixing, pulverization, or any combination thereof, the mixing is preferably performed by a treatment of stirring, mixing, or any combination thereof.

An example of the stirrer and mixer is a mechanically stirring-style mixer in which a stirring blade is provided in a mixing tank for stirring (mixing by stirring, which can be also referred to as stirring-mixing). Examples of the mechanically stirring-style mixer include a high-speed stirring-type mixer and a double arm-type mixer. Examples of the high-speed stirring-type mixer include a vertical axis rotation-type mixer and a horizontal axis rotation-type mixer, and a mixer of either type may be used.

Examples of the shape of the stirring blade used in the mechanically stirring-style mixer include a blade shape, an arm shape, an anchor shape, a paddle shape, a full-zone shape, a ribbon shape, a multistep blade shape, a double arm shape, a shovel shape, a twin-shaft blade shape, a flat blade shape, and a C-type blade shape. From the viewpoint of more efficiently promoting the reaction of the raw materials, a shovel shape, a flat blade shape, a C-type blade shape, an anchor shape, a paddle shape, and a full-zone shape are preferred, and an anchor shape, a paddle shape, and a full-zone shape are more preferred.

When a mechanically stirring-style mixer is used, the rotation number of the stirring blade can be appropriately controlled with no specific limitation depending on the volume and the temperature of the mixture in the mixing tank, the shape of the stirring blade, and the like, and can be generally approximately 5 rpm or more and 500 rpm or less. From the viewpoint of more efficiently preparing a solution, the rotation number is preferably 25 rpm or more, more preferably 50 rpm or more, further preferably 100 rpm or more, and the upper limit is preferably 450 rpm or less, more preferably 400 rpm or less, further preferably 350 rpm or less.

The temperature condition in mixing with a stirrer or a mixer is not particularly limited, and, for example, is generally -10 to 100°C, preferably 0 to 80°C, more preferably 10 to 70°C, and further preferably 30 to 60°C. The mixing time is generally 0.1 to 500 hours, and from the viewpoints of making the dispersion state of the raw material 1 uniform and promoting the reaction of the raw material 1, the mixing time is preferably 1 to 400 hours, more preferably 10 to 300 hours, further preferably 20 to 250 hours, and furthermore preferably 40 to 200 hours.

(Preparing a solution)

The solution contains the solvent 2 having a heteroatom and the raw material 2 containing a halogen atom. The raw material 2 contains a halogen atom, and thus, has a property of quite easily dissolving in the solvent 2 having a heteroatom. Accordingly, a substance containing the solvent 2 and the raw material 2 is a solution.

The method for preparing the solution is not particularly limited as long as a solution containing the solvent 2 and the raw material 2 is obtained, and, for example, a method in which the solvent 2 and the raw material 2 are mixed can be adopted. As the mixing method, a method appropriately selected from the methods described in the section of "Preparing a mixture" can be adopted.

The temperature condition in mixing with a stirrer or a mixer can be appropriately determined with no particularly limitation in view of the scale and the like, and, for example, is generally -10 to 100°C, preferably 0 to 80°C, more preferably 10 to 70°C, and further preferably 30 to 60°C. The mixing time is generally 10 seconds to 40 hours, preferably 30 seconds to 24 hours, more preferably 1 minute to 10 hours, and further preferably 3 minutes to 1 hour.

(Mixing the mixture and the solution)

By mixing the mixture and the solution, a reaction of the raw material 1 and the reaction product produced by a reaction of the raw material 1 which may be contained in the mixture with the raw material 2 which is contained in the solution progresses, and, as described above, a sulfide solid electrolyte precursor is obtained in which the raw material 2 is taken into the main backbone of the reaction product produced by a reaction of the raw material 1, a complex is formed, or otherwise, deposition occurs in some form.

As a method for mixing the mixture and the solution, any method appropriately selected from the method described in the section of "Preparing a mixture" can be adopted.

The temperature condition in mixing with a stirrer or a mixer can be appropriately determined without no limitation in view of the scale and the like, and, for example, is -10 to 180°C, preferably 0 to 100°C, more preferably 10 to 90°C, and further preferably 20 to 80°C. The mixing time is generally 10 seconds to 40 hours, preferably 30 seconds to 24 hours, more preferably 1 minute to 10 hours, and further preferably 3 minutes to 1 hour.

(Drying)

In a fluid obtained by mixing the mixture and the solution, the solvents 1 and 2 which have a heteroatom are contained. Since the production method of this embodiment includes heating, the solvents can be removed by heating, but the solvents may be removed by previous drying before heating.

By drying, the solvents 1 and 2 other than the solvents 1 and 2 having a heteroatom that contribute to the sulfide solid electrolyte precursor can be removed, and therefore, the sulfide solid electrolyte precursor is obtained.

The drying can be performed for a fluid obtained by mixing the mixture and the solution at a temperature depending on the kinds of the solvents 1 and 2 having a heteroatom. For example, the drying can be performed at a temperature equal to or higher than the boiling points of the solvents 1 and 2.

As the drying conditions, the drying temperature cannot be completely defined because it depends on the pressure condition in the drying and the boiling points of the solvents 1 and 2, but the drying temperature is generally 5°C or higher and lower than 200°C, preferably 20°C to 180°C, more preferably 35 to 120°C, and further preferably 50 to 100°C. The pressure condition may be at a normal pressure or under a pressure, but drying at a reduced pressure with a vacuum pump (vacuum drying) is preferred. The drying time is generally 1 minute to 10 hours, preferably 10 minutes to 8 hours, more preferably 30 minutes to 6 hours, and further preferably 1 hour to 5 hours.

The drying may be performed, for a fluid obtained by mixing the mixture and the solution, by filtration with a glass filter or the like, solid-liquid separation by decantation, solid-liquid separation with a centrifuge or the like, or a spray drying method by spraying.

Solid-liquid separation is specifically easily performed by a decantation in which the fluid obtained by mixing the mixture and the solution is transferred to a container, and after the sulfide solid electrolyte precipitates, the solvent as the supernatant is removed, or by filtration with a glass filter, for example, having a pore size of approximately 10 to 200 $\mu$m, preferably 20 to 150 $\mu$m.

(Heating)

The production method of this embodiment includes heating after mixing the mixture and the solution.

By heating, the solvents 1 and 2 having a heteroatom are removed from the sulfide solid electrolyte precursor contained in the fluid obtained by mixing the mixture and the solution, whereby a sulfide solid electrolyte that has a novel crystal structure and exhibits an ionic conductivity can be obtained. When the drying is not performed, the solvents 1 and 2 that do not contribute to the sulfide solid electrolyte precursor but exist as liquid can be removed at the same time.

The sulfide solid electrolyte produced by the heating can be obtained as an amorphous sulfide solid electrolyte (glass component) or can be obtained as a crystalline sulfide solid electrolyte. Whether the sulfide solid electrolyte is amorphous or crystalline can be controlled by the conditions of heating.

The heating temperature can be determined depending on the structure of the crystalline sulfide solid electrolyte obtained by heating the amorphous sulfide solid electrolyte. When the solvents 1 and 2 having a heteroatom are contained as liquid in the fluid, the boiling points of the solvents may be also taken into consideration.

For example, when an amorphous sulfide solid electrolyte is to be obtained, the heating temperature is determined as follows. The amorphous sulfide solid electrolyte is subjected to differential thermal analysis (DTA) at a temperature rising condition of 10°C/minute with a differential thermal analyzer (DTA apparatus). Then, the heating temperature can be determined, based on the peak top temperature of the exothermic peak observed on the lowermost temperature side, in the range of the peak top temperature plus preferably 5 degrees or lower, more preferably 10 degrees or lower, and further preferably 20°C or lower and the boiling points of the solvents 1 and 2 having a heteroatom or higher. The lower limit thereof is not particularly limited as long as it is the boiling points of the solvents 1 and 2 having a heteroatom or higher, but the lower limit can be set to, for example, the peak top temperature of the exothermic peak observed on the lowermost temperature side minus approximately 40 degrees or higher. By setting the heating temperature in such a temperature range, the solvents 1 and 2 taken into the sulfide solid electrolyte precursor are easily removed, and an amorphous sulfide solid electrolyte that has a novel crystal structure and can exhibit an ionic conductivity can be more efficiently and securely obtained. In addition, when the solvents 1 and 2 are contained as liquid, the solvents 1 and 2 can also be efficiently and securely removed.

The heating temperature for obtaining an amorphous sulfide solid electrolyte cannot be completely defined because it varies depending on the boiling points of the solvents 1 and 2 and the structure of the crystalline sulfide solid electrolyte obtained, but the heating temperature is generally preferably 180°C or lower, more preferably 130°C or lower, further preferably 125°C or lower, and the lower limit is not particularly limited, but is preferably 70°C or higher, more preferably 80°C or higher, further preferably 100°C or higher.

When a crystalline sulfide solid electrolyte is to be obtained, it is possible to heat the fluid obtained by mixing the mixture and the solution to directly obtain a crystalline sulfide solid electrolyte, or it is possible to once produce the aforementioned amorphous sulfide solid electrolyte and then, further heat the amorphous sulfide solid electrolyte to obtain a crystalline sulfide solid electrolyte.

The heating temperature can be determined depending on the structure of the crystalline sulfide solid electrolyte, and is preferably higher than the aforementioned heating temperature for obtaining an amorphous sulfide solid electrolyte. Specifically, the heating temperature can be determined as follows. The amorphous sulfide solid electrolyte is subjected to differential thermal analysis (DTA) at a temperature rising condition of 10°C/minute with a differential thermal analyzer (DTA apparatus). Then, the heating temperature can be determined, based on the peak top temperature of the exothermic peak observed on the lowermost temperature side, in the range of the peak top temperature plus preferably 5 degrees or higher, more preferably 10°C or higher, and further preferably 20°C or higher. The upper limit thereof is not particularly limited, but can be set to the peak top temperature plus approximately 40 degrees or lower.

By setting the heating temperature in such a temperature range, the solvents 1 and 2 is removed from the sulfide solid electrolyte precursor, and a crystalline sulfide solid electrolyte can be more efficiently and securely obtained. When the solvents 1 and 2 are contained as liquid, the solvents 1 and 2 can also be efficiently and securely removed.

The heating temperature for obtaining a crystalline sulfide solid electrolyte cannot be completely defined because it depends on the composition and the structure of the crystalline sulfide solid electrolyte obtained, but is generally preferably 120°C or higher, more preferably 150°C or higher, further preferably 170°C or higher, and the upper limit is not particularly limited, but is preferably 700°C or lower, more preferably 600°C or lower, further preferably 500°C or lower.

The heating time is not particularly limited as long as a desired amorphous sulfide solid electrolyte and crystalline sulfide solid electrolyte are obtained, and, for example, is preferably 1 minute or more, more preferably 10 minutes, further preferably 30 minutes or more, and furthermore preferably 1 hour or more. The upper limit of the heating time is not particularly limited, but is preferably 48 hours or less, more preferably 24 hours or less, further preferably 5 hours or less, and furthermore preferably 3 hours or less.

In addition, the heating is preferably performed in an inert gas atmosphere (for example, nitrogen atmosphere, argon atmosphere) or a reduced-pressure atmosphere (especially in vacuum). This is because decomposition (for example, oxidation) of the sulfide solid electrolyte can be prevented.

The method for heating is not particularly limited, and examples thereof include methods using a hot plate, a vacuum heater, an argon gas atmosphere furnace, and a kiln. Industrially, a horizontal dryer, a horizontal vibrating fluid dryer, or the like having a heating means and a feeding mechanism can be used, and can be selected depending on the amount to be treated by heating.

(Sulfide solid electrolyte)

The sulfide solid electrolyte obtained by the production method described above is a sulfide solid electrolyte that contains a lithium atom, a phosphorus atom, a sulfur atom, and at least one kind of halogen atom selected from a chlorine atom and a bromine atom, and that has a diffraction peak at $2\theta=20.8\pm0.5°$ and $22.7\pm0.3°$ in powdery X-ray diffractometry using CuK$\alpha$ line, that is, the sulfide solid electrolyte of this embodiment.

Thus, the sulfide solid electrolyte of this embodiment can be produced by the method for producing a sulfide solid electrolyte of this embodiment.

(Use)

As described above, the sulfide solid electrolyte of this embodiment or a sulfide solid electrolyte obtained by the method for producing a sulfide solid electrolyte of this embodiment is a sulfide solid electrolyte that has a novel crystal structure and exhibits an ionic conductivity. Thus, the sulfide solid electrolyte of this embodiment or a sulfide solid electrolyte obtained by the method for producing a sulfide solid electrolyte of this embodiment has a battery performance, and therefore can be suitably used in a battery.

The modified sulfide solid electrolyte of this embodiment may be used in a positive electrode layer or in a negative electrode layer, or may be used in an electrolyte layer. Note that each layer can be produced by a known method.

In the aforementioned battery, besides a positive electrode layer, an electrolyte layer, and a negative electrode layer, a collector is preferably used, and as the collector, a known collector can be used. A layer in which a substance that reacts with the solid electrolyte, such as Au, Pt, Al, Ti, or Cu, is coated with Au or the like can be used.

Examples

Next, the present invention will be specifically described with reference to examples, but the present invention is in no way limited by the examples.

(Measurement of ionic conductivity)

In Examples herein, the ionic conductivity was measured as follows.

A powder of each sulfide solid electrolyte obtained in Examples and Comparative Example was molded into a circular palette having a diameter of 6 to 10 mm (sectional area S: 0.283 to 0.785 cm$^2$) and a height (L) of 0.1 to 0.3 cm to produce a sample. Electrode terminals were attached to the sample from above and below, and measurement was performed by an alternating current impedance method at 25°C (frequency range: 1 MHz to 0.1 Hz, amplitude: 10 mV) to provide a Cole-Cole plot. The real part Z' ($\Omega$) at the point at which -Z" ($\Omega$) became the minimum near the right end of an arc observed in a region on the high frequency side was designated as the bulk resistance R ($\Omega$) of the electrolyte, and the ionic conductivity $\sigma$ (S/cm) was calculated according to the following expressions.

$$R = \rho\,(L/S)$$

$$\sigma = 1/\rho$$

(Powdery X-ray diffractometry)

In Examples herein, the powdery X-ray diffractometry (XRD) was performed as follows.

Each powder obtained in Examples and Comparative Example was charged into a hole having a diameter of 20 mm and a depth of 0.2 mm and was floated with a glass to prepare a sample. This sample was subjected to measurement using an airtight sample stage sealed with a Kapton film without contact with air under the following conditions.

Measurement apparatus: MiniFlex, manufactured by Rigaku Corporation

Tube voltage: 40 kV
Tube current: 150 mA
X-ray wavelength: Cu-K$\alpha$ line (1.5418 Å)
Optical system: focusing method
Slit configuration: solar slit 2.5°, divergence slit 0.625°, K$\beta$ filter (Ni plate)
Detector: semiconductor detector
Measurement range: 2$\theta$ = 10-60 deg
Step width, scan speed: 2.5 deg, 0.02 deg/seconds

($^{31}$P-NMR measurement)

In Examples herein, $^{31}$P-NMR was measured as follows.
Each powder obtained in Examples and Comparative Example was charged in an NMR sample tube, and a solid $^{31}$P-NMR spectrum was obtained with the following apparatus and conditions.
Nuclear magnetic resonance apparatus (NMR apparatus): JNM-ECZ400R (model number, manufactured by JEOL Ltd.)

Measurement method: single pulse method
Waiting time from FID measurement to next pulse application: 60 seconds
Observed nuclear: $^{31}$P
Resonance frequency: 400 MHz
Magnetic field: 9.4 T
Probe: 4 mm MAS probe
MAS rotation number: 11 kHz
Measurement temperature: room temperature (23°C)
n/2 Pulse width: 3.11 $\mu$s
Number of integrations: 128
Range of measurement: 250 ppm to -150 ppm
Reference: $NH_4H_2PO_4$ as external reference (1.0 ppm)

(Measurement of Raman spectrum)

In Examples herein, a Raman spectrum was measured as follows.
Each powder obtained in Examples was measured with the following apparatus under the following conditions.

- Laser irradiation apparatus: "XPloRA (model number)", manufactured by HORIBA Ltd.
- Laser wavelength: 532 nm
- Aperture: 100 $\mu$m pin hole
- Lense magnification: $\times$100
- Output: 50 to 100%
- Exposure time: 1 second
- Number of exposures: 2 to 8

Example 1

Into a round-bottomed flask (volume: 100 mL), under argon atmosphere, 0.59 g (0.0126 mol) of lithium sulfide and 0.95 g (0.0042 mol) of diphosphorus pentasulfide were introduced as the raw material 1. A stirring bar was introduced, and with stirring by a stirrer, 20 mL of tetrahydrofuran was added as the solvent 1 having a heteroatom, and while adjusting the temperature to 50°C, the mixing (rotation number: 300 rpm) was continued for 168 hours to prepare a mixture containing the raw material 1 (lithium sulfide and diphosphorus pentasulfide), the reaction product ($Li_3PS_4$) produced by a reaction of the raw material 1, and the solvent 1 (tetrahydrofuran). Here, the number of moles of the reaction product when all of the lithium sulfide and diphosphorus pentasulfide reacted to produce the reaction product is 0.0086 mol (1.54 g).
Separately from the mixture, lithium chloride (LiCl) as the raw material 2, in an amount of 0.18 g (0.0043 mol) so as to give a molar ratio of the reaction product and lithium chloride of 2:1, was dissolved in 1 ml of tetrahydrofuran and 1 ml of ethanol as the solvent 2 having a heteroatom to prepare a solution.

Subsequently, the solution was added to the mixture, which were mixed at room temperature (23°C) for 5 minutes. The resulting fluid was dried under vacuum at 80°C for 3 hours and was further heated at 180°C for 1 hour to obtain a crystalline sulfide solid electrolyte.

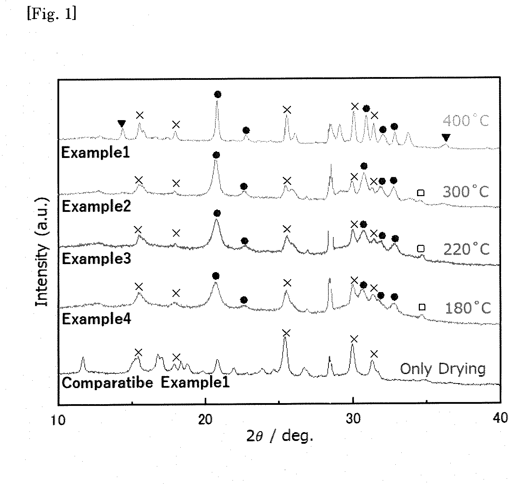

The resulting crystalline sulfide solid electrolyte was subjected to a powdery XRD diffraction measurement. The results are shown in Fig. 1.

Examples 2 to 4

A sulfide solid electrolyte was produced in the same manner as in Example 1 except for changing the heating temperature in Example 1 to a temperature shown in Table 1.

The resulting crystalline sulfide solid electrolyte was subjected to a powdery XRD diffraction measurement. The results are shown in Fig. 1. In addition, the ionic conductivity was measured. The results are shown in Table 1.

Examples 5 to 7

A sulfide solid electrolyte was produced in the same manner as in Example 4 except for changing the amounts of the raw material 1 and the raw material 2 used in Example 4 to the amounts shown in Table 1.

The resulting crystalline sulfide solid electrolyte was subjected to a powdery XRD diffraction measurement. The results are shown in Fig. 2. In addition, the sulfide solid electrolytes of Examples 6 and 7 were subjected to a measurement of the ionic conductivity. The results are shown in Table 1.

Examples 8 and 9

Sulfide solid electrolytes of Examples 8 and 9 were produced in the same manner as in Example 6 except for changing the heating temperature in Example 6 to 220°C and 300°C, respectively.

The resulting crystalline sulfide solid electrolytes were subjected to a measurement of the ionic conductivity. The results are shown in Fig. 2.

Examples 10 and 11

A sulfide solid electrolyte was produced in the same manner as in Example 4 except for changing the heating temperature and the amount of the raw material 1 used in Example 1 to the use amount shown in Table 2.

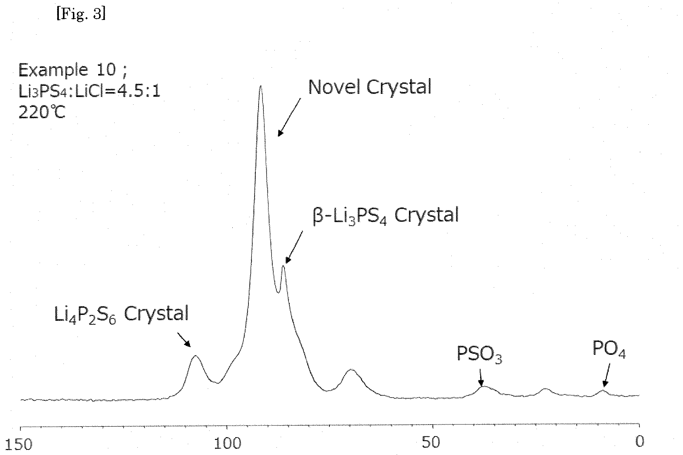

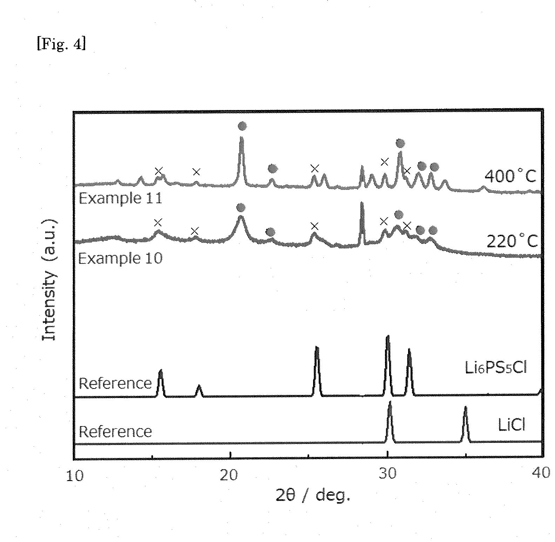

The resulting crystalline sulfide solid electrolyte and lithium chloride (LiCl) used as the raw material 2 were subjected to a powdery XRD diffraction measurement. The results are shown in Fig. 4. In addition, the ionic conductivity was measured. The results are shown in Fig. 2. Furthermore, $^{31}$P-NMR measurement was performed for Example 10. The results are shown in Fig. 3.

Example 12

A sulfide solid electrolyte was produced in the same manner as in Example 2 except for changing the kind of the solvent 1 in Example 2 to that shown in Table 2.

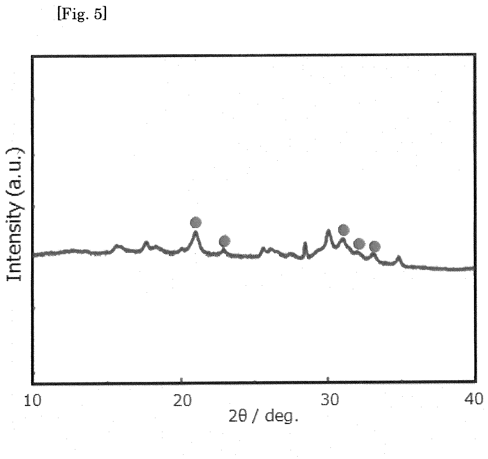

The resulting crystalline sulfide solid electrolyte was subjected to a powdery XRD diffraction measurement. The results are shown in Fig. 5.

Examples 13 to 15

A sulfide solid electrolyte was produced in the same manner as in Example 1 except for changing the heating temperature in Example 1 to the temperature shown in Table 3.

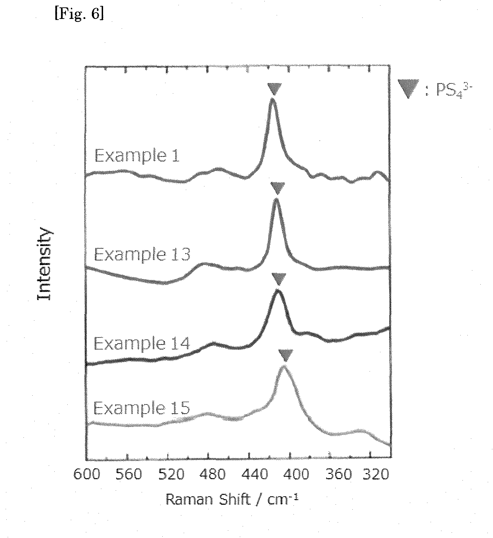

The crystalline sulfide solid electrolytes obtained in Example 1 and Examples 13 to 15 were subjected to a Raman spectrum measurement based on the aforementioned method. The results are shown in Fig. 6.

Example 16

To a mixing tank equipped with a stirring blade (volume: 100 mL), 0.65 g (0.0138 mol) of lithium sulfide and 1.04 g (0.0047 mol) of diphosphorus pentasulfide were introduced as the raw material 1 in nitrogen atmosphere. The stirring blade was rotated, and then, 20 mL of tetrahydrofuran was added as the solvent 1 having a heteroatom, and while adjusting the temperature to 50°C, the mixing (rotation number: 300 rpm) was continued for 168 hours to prepare a mixture of the raw material 1 (lithium sulfide and diphosphorus pentasulfide), the reaction product ($Li_3PS_4$) produced by a reaction of the raw material 1, and the solvent 1 (tetrahydrofuran). Here, the number of moles of the reaction product when all of the lithium sulfide and diphosphorus pentasulfide reacted to produce the reaction product is 0.0094 mol (1.69 g).

Separately from the mixture, lithium bromide (LiBr) as the raw material 2, in an amount of 0.18 g (0.0021 mol) so as to give a molar ratio of the reaction product and lithium bromide of 4.5:1, was dissolved in 1ml of tetrahydrofuran and 1ml of ethanol as the solvent 2 having a heteroatom to prepare a solution.

Subsequently, the solution was added to the mixture, which were mixed at room temperature (23°C) for 5 minutes. Then, the resulting fluid was dried under vacuum at 80°C for 3 hours and was further heated at 400°C for 1 hour to obtain a crystalline sulfide solid electrolyte.

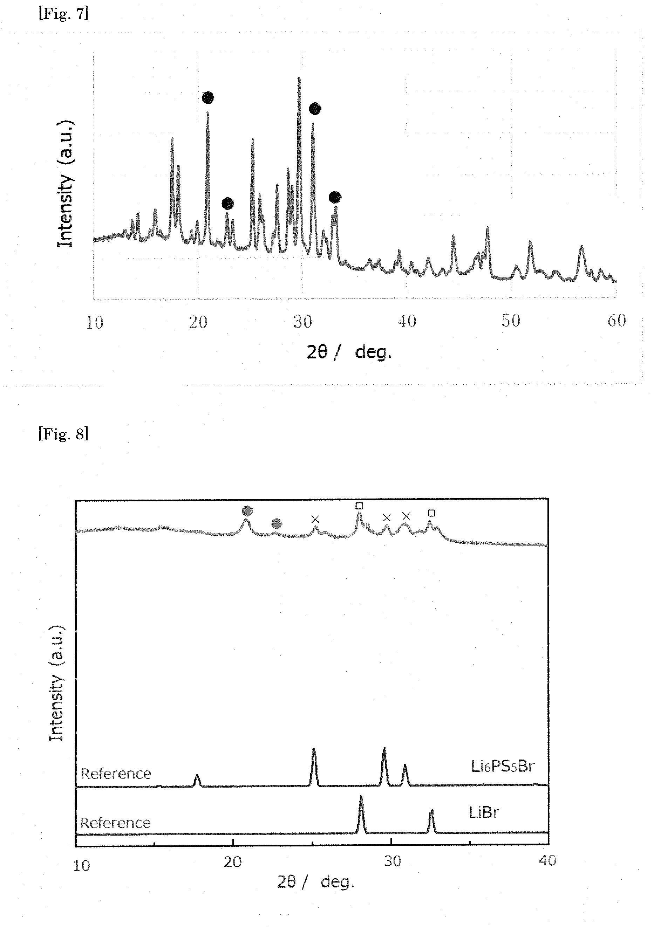

The resulting crystalline sulfide solid electrolyte was subjected to a powdery XRD diffraction measurement. The results are shown in Fig. 7.

Examples 17 to 19

A sulfide solid electrolyte was produced in the same manner as in Example 16 except for changing the amounts of the raw material 1 used and the kinds of the solvent 1 and the solvent 2 in Example 16 to those shown in Table 4.

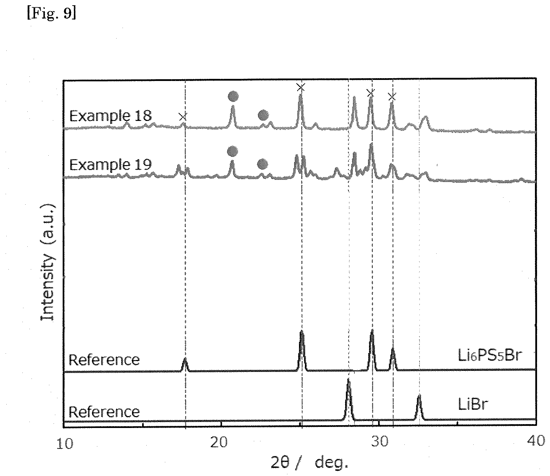

The resulting crystalline sulfide solid electrolyte was subjected to a powdery XRD diffraction measurement. The results are shown in Fig. 8 (Example 17) and Fig. 9 (Examples 18 and 19).

Comparative Example 1

A powder, that is, a sulfide solid electrolyte precursor, was produced in the same manner as in Example 1 except that the heating in Example 1 was not performed. The resulting powder was subjected to a powdery XRD diffraction measurement. The results are shown in Fig. 1.

Table 1

| | | | Example | | | | | | | | Comparative Example |
|---|---|---|---|---|---|---|---|---|---|---|---|
| | | | 1 | 2 | 3 | 4 | 5 | 6 | 7 | | 1 |
| Raw material 1 | $Li_2S$ | g | 0.59 | 0.59 | 0.59 | 0.59 | 0.89 | 1.18 | 1.48 | | 0.59 |
| | | mol | 0.0126 | 0.0126 | 0.0126 | 0.0126 | 0.0189 | 0.0252 | 0.0315 | | 0.0126 |
| | $P_2S_5$ | g | 0.95 | 0.95 | 0.95 | 0.95 | 1.43 | 1.90 | 2.38 | | 0.95 |
| | | mol | 0.0042 | 0.0042 | 0.0042 | 0.0042 | 0.0063 | 0.0084 | 0.0105 | | 0.0042 |
| | as $Li_3PS_4$ | g | 1.54 | 1.54 | 1.54 | 1.54 | 2.31 | 3.08 | 3.85 | | 1.54 |
| | | mol | 0.0086 | 0.0086 | 0.0086 | 0.0086 | 0.0128 | 0.0171 | 0.0214 | | 0.0086 |
| Raw material 2 | LiCl | g | 0.18 | 0.18 | 0.18 | 0.18 | 0.18 | 0.18 | 0.18 | | 0.18 |
| | | mol | 0.0043 | 0.0043 | 0.0043 | 0.0043 | 0.0043 | 0.0043 | 0.0043 | | 0.0043 |
| | LiBr | g | 0 | 0 | 0 | 0 | 0 | 0 | 0 | | 0 |
| | | mol | 0 | 0 | 0 | 0 | 0 | 0 | 0 | | 0 |
| Blending ratio | $Li_3PS_4$ : LiX | molar ratio | 2:1 | 2:1 | 2:1 | 2:1 | 3:1 | 4:1 | 5:1 | | 2:1 |
| | Amount of $Li_2S$ used | mol% | 75.0 | 75.0 | 75.0 | 75.0 | 75.0 | 75.0 | 75.0 | | 75.0 |
| | Amount of raw material 2 used | mol% | 25.6 | 25.6 | 25.6 | 25.6 | 17.1 | 12.8 | 10.2 | | 25.6 |
| Solvent 1 | acetonitrile | ml | 0 | 0 | 0 | 0 | 0 | 0 | 0 | | 0 |
| | ethyl acetate | ml | 0 | 0 | 0 | 0 | 0 | 0 | 0 | | 0 |
| | tetrahydrofuran | ml | 20 | 20 | 20 | 20 | 20 | 20 | 20 | | 20 |
| Solvent 2 | acetonitrile | ml | 0 | 0 | 0 | 0 | 0 | 0 | 0 | | 0 |
| | tetrahydrofuran | ml | 1 | 1 | 1 | 1 | 1 | 1 | 1 | | 1 |
| | ethanol | ml | 1 | 1 | 1 | 1 | 1 | 1 | 1 | | 1 |
| Heating temperature | | °C | 180 | 220 | 300 | 400 | 400 | 400 | 400 | | - |
| Ionic conductivity | | S/cm | - | $7.71 \times 10^{-6}$ | $6.01 \times 10^{-6}$ | $1.00 \times 10^{-4}$ | - | $9.01 \times 10^{-7}$ | $1.04 \times 10^{-4}$ | | - |

Table 2

| | | | Example | | | | |
|---|---|---|---|---|---|---|---|
| | | | 8 | 9 | 10 | 11 | 12 |
| Raw material 1 | $Li_2S$ | g | 1.18 | 1.18 | 1.33 | 1.33 | 0.59 |
| | | mol | 0.0252 | 0.0252 | 0.0284 | 0.0284 | 0.0126 |
| | $P_2S_5$ | g | 1.90 | 1.90 | 2.14 | 2.14 | 0.95 |
| | | mol | 0.0084 | 0.0084 | 0.0095 | 0.0095 | 0.0042 |
| | as $Li_3PS_4$ | g | 3.08 | 3.08 | 3.47 | 3.47 | 1.54 |
| | | mol | 0.0171 | 0.0171 | 0.0192 | 0.0192 | 0.0086 |
| Raw material 2 | LiCl | g | 0.18 | 0.18 | 0.18 | 0.18 | 0.18 |
| | | mol | 0.0043 | 0.0043 | 0.0043 | 0.0043 | 0.0043 |
| | LiBr | g | 0 | 0 | 0 | 0 | 0 |
| | | mol | 0 | 0 | 0 | 0 | 0 |
| Blending ratio | $Li_3PS_4$ : LiX | molar ratio | 4:1 | 4:1 | 4.5:1 | 4.5:1 | 2:1 |
| | Amount of $Li_2S$ used | mol% | 75.0 | 75.0 | 75.0 | 75.0 | 75.0 |
| | Amount of raw material 2 used | mol% | 12.8 | 12.8 | 11.4 | 11.4 | 25.6 |
| Solvent 1 | acetonitrile | ml | 0 | 0 | 0 | 0 | 0 |
| | ethyl acetate | ml | 0 | 0 | 0 | 0 | 20 |
| | tetrahydrofuran | ml | 20 | 20 | 20 | 20 | 0 |
| Solvent 2 | acetonitrile | ml | 0 | 0 | 0 | 0 | 0 |
| | tetrahydrofuran | ml | 1 | 1 | 1 | 1 | 1 |
| | ethanol | ml | 1 | 1 | 1 | 1 | 1 |
| Heating temperature | | °C | 220 | 300 | 220 | 400 | 220 |
| Ionic conductivity | | S/cm | $1.88 \times 10^{-5}$ | $2.99 \times 10^{-6}$ | $5.50 \times 10^{-6}$ | $6.80 \times 10^{-7}$ | - |

Table 3

| | | | Example | | | |
|---|---|---|---|---|---|---|
| | | | 1 | 13 | 14 | 15 |
| Raw material 1 | $Li_2S$ | g | 0.59 | 0.59 | 0.59 | 0.59 |
| | | mol | 0.0126 | 0.0126 | 0.0126 | 0.0126 |
| | $P_2S_5$ | g | 0.95 | 0.95 | 0.95 | 0.95 |
| | | mol | 0.0042 | 0.0042 | 0.0042 | 0.0042 |
| | as $Li_3PS_4$ | g | 1.54 | 1.54 | 1.54 | 1.54 |
| | | mol | 0.0086 | 0.0086 | 0.0086 | 0.0086 |

(continued)

| | | | Example | | | |
|---|---|---|---|---|---|---|
| | | | 1 | 13 | 14 | 15 |
| Raw material 2 | LiCl | g | 0.18 | 0.18 | 0.18 | 0.18 |
| | | mol | 0.0043 | 0.0043 | 0.0043 | 0.0043 |
| | LiBr | g | 0 | 0 | 0 | 0 |
| | | mol | 0 | 0 | 0 | 0 |
| Blending ratio | $Li_3PS_4$ : LiX | molar ratio | 2:1 | 2:1 | 2:1 | 2:1 |
| | Amount of $Li_2S$ used | mol% | 75.0 | 75.0 | 75.0 | 75.0 |
| | Amount of raw material 2 used | mol% | 25.6 | 25.6 | 25.6 | 25.6 |
| Solvent 1 | acetonitrile | ml | 0 | 0 | 0 | 0 |
| | ethyl acetate | ml | 0 | 0 | 0 | 0 |
| | tetrahydrofuran | ml | 20 | 20 | 20 | 20 |
| Solvent 2 | acetonitrile | ml | 0 | 0 | 0 | 0 |
| | tetrahydrofuran | ml | 1 | 1 | 1 | 1 |
| | ethanol | ml | 1 | 1 | 1 | 1 |
| Heating temperature | | °C | 180 | 250 | 350 | 450 |
| Ionic conductivity | | S/cm | - | - | - | - |

Table 4

| | | | Example | | | |
|---|---|---|---|---|---|---|
| | | | 16 | 17 | 18 | 19 |
| Raw material 1 | $Li_2S$ | g | 0.648 | 0.288 | 0.29 | 0.29 |
| | | mol | 0.0138 | 0.0062 | 0.0062 | 0.0062 |
| | $P_2S_5$ | g | 1.04 | 0.46 | 0.46 | 0.46 |
| | | mol | 0.0046 | 0.0020 | 0.0020 | 0.0020 |
| | as $Li_3PS_4$ | g | 1.69 | 0.75 | 0.75 | 0.75 |
| | | mol | 0.0094 | 0.0042 | 0.0042 | 0.0042 |
| Raw material 2 | LiCl | g | 0 | 0 | 0 | 0 |
| | | mol | 0 | 0 | 0 | 0 |
| | LiBr | g | 0.18 | 0.18 | 0.18 | 0.18 |
| | | mol | 0.0021 | 0.0021 | 0.0021 | 0.0021 |
| Blending ratio | $Li_3PS_4$ : LiX | molar ratio | 4.5:1 | 2.1 | 2.1 | 2.1 |
| | Amount of $Li_2S$ used | mol% | 75.0 | 75.0 | 75.0 | 75.0 |
| | Amount of raw material 2 used | mol% | 11.4 | 25.4 | 25.4 | 25.4 |
| Solvent 1 | acetonitrile | ml | 0 | 0 | 0 | 20 |
| | ethyl acetate | ml | 0 | 0 | 0 | 0 |
| | tetrahydrofuran | ml | 20 | 20 | 20 | 0 |

(continued)

|  |  |  | Example | | | |
|---|---|---|---|---|---|---|
|  |  |  | 16 | 17 | 18 | 19 |
| Solvent 2 | acetonitrile | ml | 0 | 0 | 0 | 1 |
|  | tetrahydrofuran | ml | 1 | 1 | 1 | 0 |
|  | ethanol | ml | 1 | 1 | 1 | 1 |
| Heating temperature |  | °C | 400 | 220 | 400 | 400 |
| Ionic conductivity |  | S/cm | - | - | - | - |

Note)
• In Tables 1 to 4, "Li$_3$PS4:LiX" is a molar ratio of the reaction product (Li$_3$PS$_4$) and the raw material 2 (LiCl or LiBr) when all of the raw material 1 (lithium sulfide and diphosphorus pentasulfide) used in the Example reacted.
• In Tables 1 to 4, "Amount of Li$_2$S used" is the amount (% by mole) of Li$_2$S used relative to the total amount of Li$_2$S and P$_2$S$_5$ in the raw material 1.
• In Tables 1 to 4, "Amount of raw material 2 used" is the amount (% by mole) of the raw material 2 used relative to the total amount of the raw material 1 (lithium sulfide and diphosphorus pentasulfide) and the raw material 2 (LiCl or LiBr).

It was found from the results of the Examples that all the sulfide solid electrolytes of this embodiment were a solid electrolyte that exhibited an ionic conductivity.

It was found in Figs. 1, 2, 4, and 5 that sulfide solid electrolytes of Example 1 to 7 and 10 to 12 in which lithium chloride (LiCl) was used as the raw material 2 had a diffraction peak at at least one position of $2\theta=20.8\pm0.5°$ and $22.7\pm0.3°$ and thus had a novel crystal structure. It was also found that the novel crystal structure that the sulfide solid electrolyte of this embodiment had possibly exhibited a diffraction peak not only at $2\theta=20.8\pm0.5°$ and $22.7\pm0.3°$ but also further at $2\theta=30.8\pm0.5°$, $31.9\pm0.5°$, and $32.7\pm0.5°$ (especially, diffraction peaks ● in Figs. 1, 4, and 5). It was also found that the sulfide-based solid electrolyte of Example 1 exhibited diffraction peaks also at $2\theta=14.3\pm0.5°$ and $36.2\pm0.5°$ (diffraction peaks ▼ in Figs. 1 and 4). In Fig. 2, diffraction peaks ● and ▼ are not marked, but such diffraction peaks were found similarly as in Figs. 1 and 4.

The sulfide solid electrolytes of Examples 16 to 19 were obtained by using lithium bromide (LiBr) as the raw material 2. As shown in Figs. 7 to 9, it was found that the sulfide solid electrolytes of the Examples also had a diffraction peak at $2\theta=20.8\pm0.5°$ and $22.7\pm0.3°$ similarly as in those obtained by using lithium chloride (LiCl), and thus had a novel crystal structure. It was also found that the sulfide solid electrolyte of Example 16 possibly further exhibited a diffraction peak at at least one position of $2\theta=30.8\pm0.5°$, $31.9\pm0.5°$, and $32.7\pm0.5°$ similarly as in those obtained by using lithium chloride (LiCl) (see Fig. 7).

It was found from Fig. 1 that the powder obtained in Comparative Example 1 which corresponds to Example 1 in which the heating was not performed had a diffraction peak attributable to an argyrodite crystal structure (Li$_6$PS$_5$Cl) (diffraction peak × in Fig. 1), but did not have any diffraction peak at $2\theta=20.8\pm0.5°$ and $22.7\pm0.3°$, and further at $2\theta=30.8\pm0.5°$, $31.9\pm0.5°$, and $32.7\pm0.5°$ and thus, did not have a novel crystal structure. Since the X-ray diffraction spectrum of Comparative Example 1 is different also from the X-ray diffraction spectrum of Li$_3$PS$_4$ shown in Fig. 2 which corresponds to the reaction product produced by a reaction of the raw material 1 in Example 1, it can be seen that the powder obtained in Comparative Example 1 is not a sulfide solid electrolyte nor a reaction product (Li$_3$PS$_4$), but is a substance that can be referred to as a sulfide solid electrolyte precursor.

It was found from Fig. 2 that the sulfide solid electrolyte having an argyrodite crystal structure (Li$_6$PS$_5$Cl) did not have any specific diffraction peak.

Examples 8 and 9 correspond to Example 6 in which the heating temperature was changed to respectively to 220°C and 300°C. Although powdery X-ray diffractometry was not performed, in light of the fact that a novel crystal structure was found also in Examples 2 and 3 that correspond to Example 4 in which the heating temperature was changed respectively to 220°C and 300°C, it is considered that Example 8 and 9 also have a novel crystal structure.

According to Fig. 3, the sulfide solid electrolyte of Example 10 (Li$_3$PS$_4$:LiCl = 4.5:1, heating temperature: 220°C) has a peak at 90.0 to 92.0 ppm in a $^{31}$P-NMR spectrum. Since a structure that exhibits a peak at 90.0 to 92.0 ppm has never been found in any solid electrolyte before, it was able to be confirmed also from the $^{31}$P-NMR spectrum that the sulfide solid electrolyte of Example 10 had a novel crystal structure.

The sulfide solid electrolytes of Example 1 and Example 13 to 15 which correspond to Example 1 in which the heating temperature was changed were subjected to Raman spectrum measurement. Then, as shown in Fig. 6, a peak

attributable to the $PS_4^{3-}$ structure was found in all the sulfide solid electrolytes. Accordingly, it was found that the sulfide solid electrolyte of this embodiment had the $PS_4^{3-}$ structure as a basic structure.

Industrial Applicability

The sulfide solid electrolyte of this embodiment has a novel crystal structure and exhibits an ionic conductivity. Thus, the sulfide solid electrolyte of this embodiment is suitably used in a battery, especially in a battery for use in information-related devices, communication devices, and so on, such as personal computers, video cameras, and mobile phones.

**Claims**

1.  A sulfide solid electrolyte comprising a lithium atom, a phosphorus atom, a sulfur atom, and at least one kind of halogen atom selected from a chlorine atom and a bromine atom,
    the sulfide solid electrolyte having a diffraction peak at $2\theta=20.8\pm0.5°$ and $22.7\pm0.3°$ in powdery X-ray diffractometry using CuK$\alpha$ line.

2.  The sulfide solid electrolyte according to claim 1, wherein the sulfide solid electrolyte further has a diffraction peak at at least one position of $2\theta=30.8\pm0.5°$, $31.9\pm0.5°$, and $32.7\pm0.5°$ in powdery X-ray diffractometry using CuK$\alpha$ line.

3.  The sulfide solid electrolyte according to claim 1 or 2, wherein the sulfide solid electrolyte further has a diffraction peak at at least one position of $2\theta=14.3\pm0.5°$ and $36.2\pm0.5°$ in powdery X-ray diffractometry using CuK$\alpha$ line.

4.  The sulfide solid electrolyte according to any one of claims 1 to 3, wherein the sulfide solid electrolyte has a composition represented by the following general formula (1):

    $$Li_aP_bS_cX_d \qquad (I)$$

    wherein X is at least one kind of halogen atom selected from a chlorine atom and a bromine atom, and $3.0\leq a<4.0$, $b=1.0$, $3.5\leq c\leq4.5$, and $0.05\leq d<1.0$ are satisfied.

5.  The sulfide solid electrolyte according to any one of claims 1 to 4, wherein the sulfide solid electrolyte has a peak in 90.0 to 92.0 ppm in a $^{31}$P-NMR spectrum.

6.  A method for producing a sulfide solid electrolyte, the method comprising

    mixing a solvent 1 having a heteroatom and a raw material 1 containing any atom of a lithium atom, a phosphorus atom, and a sulfur atom to prepare a mixture,
    preparing a solution that contains a raw material 2 containing at least one kind of halogen atom selected from a chlorine atom and a bromine atom and a solvent 2 having a heteroatom,
    mixing the mixture and the solution to prepare a fluid, and
    heating the fluid.

7.   The method for producing a sulfide solid electrolyte according to claim 6, wherein the heating is performed at a heating temperature of 130°C or higher and 600°C or lower.

8.  The method for producing a sulfide solid electrolyte according to claim 6 or 7, wherein the raw material 1 comprises lithium sulfide and phosphorus sulfide.

9.  The method for producing a sulfide solid electrolyte according to claim 8, wherein the lithium sulfide is used in an amount of 60% by mole or more and 80% by mole or less relative to the total amount of the lithium sulfide and the phosphorus sulfide.

10. The method for producing a sulfide solid electrolyte according to any one of claims 6 to 9, wherein the raw material 2 comprises at least one lithium halide selected from lithium chloride and lithium bromide.

11. The method for producing a sulfide solid electrolyte according to any one of claim 6 to 10, wherein the raw material 2 is used in an amount of 4.5% by mole or more and 25.0% by mole or less relative to the total amount of the raw material 1 and the raw material 2.

12. The method for producing a sulfide solid electrolyte according to any one of claim 6 to 11, wherein the solvent 1 comprises at least one solvent selected from a solvent having a nitrogen atom and a solvent having an oxygen atom.

13. The method for producing a sulfide solid electrolyte according to claim 12, wherein the solvent having a nitrogen atom is a nitrile solvent.

14. The method for producing a sulfide solid electrolyte according to claim 12 or 13, wherein the solvent containing an oxygen atom is an ether solvent.

15. The method for producing a sulfide solid electrolyte according to any one of claim 6 to 14, wherein in the preparing a mixture, the solvent 1 is used in an amount of 2 parts by mass or more and 50 parts by mass or less relative to 1 part by mass of the raw material 1.

16. The method for producing a sulfide solid electrolyte according to any one of claim 6 to 15, wherein the solvent 2 comprises at least one solvent selected from a solvent having a nitrogen atom and a solvent having an oxygen atom.

17. The method for producing a sulfide solid electrolyte according to claim 16, wherein the solvent having a nitrogen atom is a nitrile solvent.

18. The method for producing a sulfide solid electrolyte according to claim 16 or 17, wherein the solvent having an oxygen atom is at least one solvent selected from an ether solvent and an alcohol solvent.

19. The method for producing a sulfide solid electrolyte according to any one of claim 6 to 18, wherein in the preparing a solution 2, the solvent 2 is used in an amount of 0.1 parts by mass or more and 100 parts by mass or less relative to 1 part by mass of the raw material 2.

[Fig. 1]

[Fig. 2]

[Fig. 3]

Example 10 ;
Li₃PS₄:LiCl=4.5:1
220℃

Novel Crystal

β-Li₃PS₄ Crystal

Li₄P₂S₆ Crystal

PSO₃

PO₄

150            100            50            0

[Fig. 4]

[Fig. 5]

[Fig. 6]

[Fig. 7]

[Fig. 8]

33

[Fig. 9]

## INTERNATIONAL SEARCH REPORT

| International application No. |
|---|
| **PCT/JP2022/027739** |

### A. CLASSIFICATION OF SUBJECT MATTER

*H01B 1/06*(2006.01)i; *H01B 1/10*(2006.01)i; *H01B 13/00*(2006.01)i; *H01M 10/052*(2010.01)i; *H01M 10/0562*(2010.01)i
FI: H01B1/06 A; H01B1/10; H01B13/00 Z; H01M10/0562; H01M10/052

According to International Patent Classification (IPC) or to both national classification and IPC

### B. FIELDS SEARCHED

Minimum documentation searched (classification system followed by classification symbols)

H01B1/06; H01B1/10; H01B13/00; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/049414 A1 (MITSUI MINING & SMELTING CO., LTD.) 18 March 2021 (2021-03-18) paragraphs [0010]-[0056], fig. 1 | 1–4 |
| Y | paragraphs [0010]-[0056], fig. 1 | 5 |
| A | paragraphs [0010]-[0056], fig. 1 | 11, 13-15, 19 |
| Y | WO 2021/054412 A1 (IDEMITSU KOSAN CO., LTD.) 25 March 2021 (2021-03-25) paragraph [0018] | 5 |
| A | paragraph [0018] | 11, 13-15, 19 |
| X | WO 2020/105737 A1 (IDEMITSU KOSAN CO., LTD.) 28 May 2020 (2020-05-28) paragraphs [0014]-[0176] | 6-10, 12, 16-18 |
| A | paragraphs [0014]-[0176] | 11, 13-15, 19 |
| A | JP 2016-207354 A (IDEMITSU KOSAN CO., LTD., TOYOTA MOTOR CORP.) 08 December 2016 (2016-12-08) paragraphs [0012]-[0081] | 11, 13-15, 19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 September 2022** | **04 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/027739**

**Box No. III    Observations where unity of invention is lacking (Continuation of item 3 of first sheet)**

This International Searching Authority found multiple inventions in this international application, as follows:

Document 1: WO 2021/049414 A1 (MITSUI MINING & SMELTING CO., LTD.) 18 March 2021 (2017-03-18)
   paragraphs [0010]-[0056], fig. 1
   & US 2022/0131183 A1
   paragraphs [0012]-[0076], fig. 1
   & CN 113508484 A
   & KR 10-2021-0121201 A

The inventions set forth in the claims are classified into the following two inventions.
(Invention 1) Claims 1-5
   Document 1 discloses a sulfide solid electrolyte containing elemental lithium (Li), elemental phosphorous (P), elemental sulfur (S), elemental halogen (X), and elemental oxygen (O), and indicates:
   that for a sulfide solid electrolyte containing a crystalline phase having an argyrodite crystal structure, the elemental halogen (X) is a combination of Cl and Br from the viewpoint of improving ion conductivity;
   that in X-ray diffraction (XRD) measurement of the sulfide solid electrolyte using CuKα1 radiation, the XRD diffraction pattern has a diffraction peak A in the range of $2\theta=20.7°\pm0.5°$, a diffraction peak B in the range of $25.4°\pm1.0°$, a diffraction peak C in the range of $22.0°\pm0.5°$,
   and additionally, a diffraction peak in $2\theta=15.34°\pm1.00°$, $17.74°\pm1.00°$, $25.19°\pm1.00°$, $29.62°\pm1.00°$, $30.97°\pm1.00°$, $44.37°\pm1.00°$, $47.22°\pm1.00°$, and $51.70°\pm1.00°$;
   that with regard to the compositional formula (I): $Li_aPS_bX_c$,
   a representing the molar ratio of elemental Li is 3.0 to 6.5, the molar ratio of elemental P is 1.0, b representing the molar ratio of elemental S is 3.5 to 5.5, elemental X is one or two species among elemental Cl and elemental Br, and c representing the molar ratio of elemental X is 0.1 to 3.0; and
   that the method for manufacturing the sulfide solid electrolyte includes a mixing step for obtaining a mixture by mixing a sulfide electrolyte starting material and a hydrate of lithium halide, and a heating step for heating the mixture to 50°C or higher under vacuum. Claims 1-4 lack novelty in the light of document 1 and do not have special technical features. However, claim 5 depending from claim 1 has the special technical feature of "the P-NMR spectrum has a peak at 90.0-92.0 ppm," and claim 5 also has the same feature as claim 1. Therefore, claims 1-5 are classified as invention 1.

(Invention 2) Claims 6-19
   Claims 6-19 cannot be said to share the same or corresponding features with claim 5 classified as invention 1. Furthermore, claims 6-19 do not depend from claims 1-5 classified as invention 1. Additionally, claims 6-19 are not substantially identical to or similarly closely related to any of the claims classified as invention 1.
   Therefore, claims 6-19 cannot be classified as invention 1.
   Claims 6-19 are classified as invention 2 as a result of having the special technical feature of "a method for manufacturing a sulfide solid electrolyte, the method including: obtaining a mixture by mixing a solvent 1 having heteroatoms, and a starting material 1 containing any one of lithium ions, phosphorous atoms, and sulfur atoms; obtaining a solution containing a starting material 2 including at least one species of halogen atoms selected from chlorine atoms and bromine atoms, and a solvent 2 having heteroatoms; mixing the mixture and the solution; and heating a fluid obtained by the mixing."

Form PCT/ISA/210 (continuation of first sheet) (January 2015)

**INTERNATIONAL SEARCH REPORT**

International application No.

**PCT/JP2022/027739**

| Box No. III | Observations where unity of invention is lacking (Continuation of item 3 of first sheet) |
|---|---|

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2022/027739**

| Patent document cited in search report | | | Publication date (day/month/year) | Patent family member(s) | | | Publication date (day/month/year) |
|---|---|---|---|---|---|---|---|
| WO | 2021/049414 | A1 | 18 March 2021 | US | 2022/0131183 | A1 | |
| | | | | paragraphs [0012]-[0076], fig. 1 | | | |
| | | | | CN | 113508484 | A | |
| | | | | KR | 10-2021-0121201 | A | |
| WO | 2021/054412 | A1 | 25 March 2021 | CN | 114245945 | A | |
| WO | 2020/105737 | A1 | 28 May 2020 | WO | 2020/105736 | A1 | |
| | | | | US | 2021/0249685 | A1 | |
| | | | | paragraphs [0031]-[0293] | | | |
| | | | | US | 2021/0391596 | A1 | |
| | | | | US | 2021/0242496 | A1 | |
| | | | | EP | 3886122 | A1 | |
| | | | | EP | 3886119 | A1 | |
| | | | | CN | 112334999 | A | |
| | | | | CN | 112384993 | A | |
| | | | | KR | 10-2021-0091047 | A | |
| | | | | KR | 10-2021-0091046 | A | |
| JP | 2016-207354 | A | 08 December 2016 | (Family: none) | | | |

Form PCT/ISA/210 (patent family annex) (January 2015)

**REFERENCES CITED IN THE DESCRIPTION**

**Patent documents cited in the description**

- JP 2005228570 A
- JP 2013201110 A
- WO 2014208180 A
- WO 2014208239 A
- WO 2018183365 A
- WO 2018047566 A
- JP 2013016423 A

**Non-patent literature cited in the description**

- *Inorg. Chem.,* 2020, vol. 59 (1), 226-234
- **KANNO et al.** *Journal of The Electrochemical Society,* 2001, vol. 148 (7), A742-746
- *Solid State Ionics,* 2006, vol. 177, 2721-2725